(19) Europäisches Patentamt
European Patent Office
Office européen des brevets

(11) **EP 4 780 111 A1**

(12) **EUROPEAN PATENT APPLICATION**
published in accordance with Art. 153(4) EPC

(43) Date of publication:
**22.07.2026 Bulletin 2026/30**

(21) Application number: **24870427.2**

(22) Date of filing: **09.09.2024**

(51) International Patent Classification (IPC):
***H04W 72/231*** (2023.01)

(52) Cooperative Patent Classification (CPC):
**H04B 7/06; H04L 5/00; H04W 72/044; H04W 72/231**

(86) International application number:
**PCT/CN2024/117731**

(87) International publication number:
**WO 2025/066882 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.09.2023 CN 202311273544**
**03.04.2024 CN 202410417567**

(71) Applicant: **HUAWEI TECHNOLOGIES CO., LTD.**
**Shenzhen 518129 (CN)**

(72) Inventors:
• **YUAN, Yiling**
**Shenzhen, Guangdong 518129 (CN)**
• **GAO, Junhui**
**Shenzhen, Guangdong 518129 (CN)**
• **LI, Ting**
**Shenzhen, Guangdong 518129 (CN)**
• **YE, Chencheng**
**Shenzhen, Guangdong 518129 (CN)**
• **WANG, Xiaohan**
**Shenzhen, Guangdong 518129 (CN)**
• **JIN, Huangping**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **RESOURCE CONFIGURATION METHOD AND APPARATUS**

(57) A resource configuration method and apparatus are provided, and relate to the communication field. In the method, first indication information is sent to a terminal device. The first indication information indicates M reference signal resources. A reference signal is sent on the M reference signal resources. CSI from the terminal device is received. The CSI is determined based on the reference signal. In ports corresponding to the M reference signal resources, a smallest port index is 0+C, and a largest port index is K-1+C, K is a sum of quantities of ports respectively corresponding to the M reference signal resources, M is an integer greater than or equal to 2, C is a constant, and K is an integer greater than 32. According to the foregoing method, a network device and the terminal device can determine that the ports corresponding to the M reference signal resources correspond to a same TRP, and the M reference signal resources can support a larger quantity of antenna ports.

FIG. 4

**Description**

CROSS-REFERENCE TO RELATED APPLICATIONS

This application claims priorities to Chinese Patent Application No. 202311273544.0, filed with the China National Intellectual Property Administration on September 27, 2023, and entitled "RESOURCE CONFIGURATION METHOD AND APPARATUS", and to Chinese Patent Application No. 202410417567.2, filed with the China National Intellectual Property Administration on April 3, 2024, and entitled "RESOURCE CONFIGURATION METHOD AND APPARATUS", both of which are incorporated herein by reference in their entireties.

TECHNICAL FIELD

This application relates to the field of communication technologies, and in particular, to a resource configuration method and apparatus.

BACKGROUND

With popularization of 5th generation (5th generation, 5G) mobile communication devices and emergence of a large quantity of new service types such as extended reality (extended reality, XR) and short videos, a traffic requirement greatly increases. To meet the rapidly increasing traffic requirement, a massive multiple-input multiple-output (massive multiple-input multiple-output, massive MIMO) technology evolves to a larger antenna scale, for example, from 32 antenna ports to 64 antenna ports or even more antenna ports.

Currently, an existing channel state information-reference signal (channel state information-reference signal, CSI-RS) resource can support a maximum of 32 antenna ports. Therefore, for a frequency division duplex (frequency division duplex, FDD) system of an antenna array with 64 antenna ports, channel state information in a complete space domain dimension cannot be obtained, and a large performance loss exists.

SUMMARY

This application provides a resource configuration method and apparatus, to configure a CSI-RS resource that supports a larger quantity of ports.

According to a first aspect, this application provides a resource configuration method. The method may be performed by a network device or a module (for example, a chip) in the network device. The method includes: sending first indication information to a terminal device, where the first indication information indicates M reference signal resources, in ports corresponding to the M reference signal resources, a smallest port index is 0+C, and a largest port index is K-1+C, K is a sum of quantities of ports respectively corresponding to the M reference signal resources, M is an integer greater than or equal to 2, C is a constant, and K is an integer greater than 32; sending a reference signal on the M reference signal resources; and receiving CSI from the terminal device. The CSI is determined based on the reference signal.

According to the foregoing method, the network device may configure the M reference signal resources, and a total quantity of ports corresponding to the reference signal resources is greater than 32. In the ports corresponding to the reference signal resources, the smallest port index is 0+C, and the largest port index is K-1+C. Therefore, port indexes of the ports corresponding to the reference signal resources may be uniformly numbered, instead of a case in which a port index of a port corresponding to each reference signal resource is separately numbered. In this way, the network device can determine that the ports corresponding to the M reference signal resources correspond to a same TRP, and the M reference signal resources can support a larger quantity of antenna ports. This may be applied to an FDD system of an antenna array with more than 32 antenna ports.

The reference signal resource may be a CSI-RS resource, a demodulation reference signal (demodulation reference signal, DMRS) resource, or the like. This is not limited in this application.

In a possible design, port indexes of any two of the M reference signal resources are different.

In a possible design, a port index $p_m$ corresponding to a reference signal resource whose sequence number is m is obtained based on an index of a code division multiplexing CDM group of the reference signal resource whose sequence number is m, an index of a sequence in the CDM group of the reference signal resource whose sequence number is m, a size of the CDM group of the reference signal resource whose sequence number is m, and quantities of ports respectively corresponding to reference signal resources whose sequence numbers are less than or equal to m, where $0 \leq m \leq M-1$, and m is an integer.

In a possible design, a correspondence between $p_m$ and all of the index of the CDM group of the reference signal resource whose sequence number is m, the index of the sequence in the CDM group of the reference signal resource whose sequence number is m, the size of the CDM group of the reference signal resource whose sequence number is m, and the quantities of ports respectively corresponding to the reference signal resources whose sequence numbers are less than or equal to m is as follows:

$$p_m = C + s + jL_m + \sum_{k=0}^{m-1} N_k$$

Herein, j represents the index of the CDM group, $0 \le j \le \frac{N_m}{L_m} - 1$, s represents the index of the sequence in the CDM group, $0 \le s \le L_m$ - $N_m$ represents a quantity of ports of the reference signal resource whose sequence number is m, $L_m$ represents the size of the CDM group, $\sum_{k=0}^{m-1} N_k$ is a sum of quantities of ports respectively corresponding to reference signal resources whose sequence numbers are less than m, $N_m$ is the quantity of ports corresponding to the reference signal resource whose sequence number is m, and j and s are integers.

According to the foregoing manner, the port indexes respectively corresponding to the M reference signal resources may be determined conveniently. Each reference signal resource cannot form an independent dual-polarized antenna array. Therefore, the reference signal resource cannot be reused.

In a possible design, the quantities of ports respectively corresponding to the M reference signal resources are all N, K=M*N, and N is a positive integer.

In a possible design, a port index $p_m$ corresponding to a reference signal resource whose sequence number is m is obtained based on an index of a CDM group of the reference signal resource whose sequence number is m, an index of a sequence in the CDM group of the reference signal resource whose sequence number is m, a size of the CDM group of the reference signal resource whose sequence number is m, and a value of N, where 0≤m≤M-1, and m is an integer.

In a possible design, a correspondence between $p_m$ and the index of the CDM group of the reference signal resource whose sequence number is m, the index of the sequence in the CDM group of the reference signal resource whose sequence number is m, the size of the CDM group of the reference signal resource whose sequence number is m, and the value of N is as follows:

$$p_m = C + s + jL_m + m\mathrm{N}$$

Herein, j represents the index of the CDM group, $0 \le j \le \frac{\mathrm{N}}{L_m} - 1$, s represents the index of the sequence in the CDM group, $0 \le s \le L_m$ - 1, $L_m$ represents the size of the CDM group, and j and s are integers.

According to the foregoing manner, when the quantities of ports respectively corresponding to the M reference signal resources are the same, the port indexes respectively corresponding to the M reference signal resources may be determined conveniently. Each reference signal resource cannot form an independent dual-polarized antenna array. Therefore, the reference signal resource cannot be reused.

In a possible design, a correspondence between $p_m$ and the index of the CDM group of the reference signal resource whose sequence number is m, the index of the sequence in the CDM group of the reference signal resource whose sequence number is m, the size of the CDM group of the reference signal resource whose sequence number is m, and the value of N is as follows:

$$p_m = C + (s + jL_m)M + m$$

Herein, j represents the index of the CDM group, $0 \le j \le \frac{\mathrm{N}}{L_m} - 1$, s represents the index of the sequence in the CDM group, $0 \le s \le L_m$ - 1, $L_m$ represents the size of the CDM group, and j and s are integers.

Therefore, a port corresponding to each reference signal resource may correspond to one array, and the array is a uniform dual-polarized planar array. In this way, a port corresponding to a single reference signal resource may alternatively be used for separate quantization reporting, so that the reference signal resource can be reused. In other words, each of the M reference signal resources may be used as a separate measurement resource, and is to be used by a terminal device that does not support channel measurement of more than 32 ports. In actual deployment, measurement capabilities of terminal devices are different, and some terminal devices support only a reference signal resource of no more than 32 ports. Therefore, according to the foregoing manner, the reference signal resource can be reused, and overheads of the reference signal resource can be reduced. In the foregoing manner, a formula of the port index is simple, and is easy to implement, and the reference signal resource can be reused.

In a possible design, a port index $p_m$ corresponding to a reference signal resource whose sequence number is m is obtained based on a quantity $n_1$ of ports in a first dimension in a polarization direction in a port group corresponding to each reference signal resource, a quantity $n_2$ of ports in a second dimension in the polarization direction in the port group corresponding to each reference signal resource, and a location of a port group corresponding to the reference signal resource whose sequence number is m in port groups respectively corresponding to the M reference signal resources.

In a possible design, the port index $p_m$ corresponding to the reference signal resource whose sequence number is m is obtained based on an index of a CDM group of the reference signal resource whose sequence number is m, an index of a sequence in the CDM group of the reference signal resource whose sequence number is m, a size of the CDM group of the reference signal resource whose sequence number is m, a value of N, a quantity $n_1$ of ports in a first dimension in the polarization direction in the port group corresponding to each reference signal resource, a quantity $n_2$ of ports in a second dimension in the polarization direction in the port group corresponding to each reference signal resource, a sequence number in the first dimension in the port group corresponding to the reference signal resource whose sequence number is m, and a sequence number in the second dimension in the port group corresponding to the reference signal resource whose sequence number is m, $0 \le m \le M-1$, m is an integer, $K=2M*n_1*n_2$, quantities of ports in the first dimension in the port groups respectively corresponding to the M reference signal resources are the same, and quantities of ports in the second dimension in the port groups respectively corresponding to the M reference signal resources are the same.

In the foregoing manner, each reference signal resource corresponds to one dual-polarized array. Therefore, for a single reference signal resource, quantization feedback may be performed based on an existing codebook. To be specific, the single reference signal resource may be used for separate quantization reporting, so that the reference signal resource can be reused. Therefore, each of the M reference signal resources may be used as a separate measurement resource, and is to be used by a terminal device that does not support channel measurement of more than 32 ports. In actual deployment, measurement capabilities of terminal devices are different, and some terminal devices support only a reference signal resource of no more than 32 ports. Therefore, according to the foregoing manner, the reference signal resource can be reused, and overheads of the reference signal resource can be reduced.

In a possible design, the port index $p_m$ corresponding to the reference signal resource whose sequence number is m is determined based on Formula A or Formula B:

Formula A:

$$p_m = \begin{cases} 3000 + \dfrac{N_m}{2}\dfrac{N_2}{n_2}h_m + n_2 v_m + \left\lfloor \dfrac{s+jL_m}{n_2} \right\rfloor N_2 + \left((s+jL_m)\%n_2\right), & s+jL_m < \dfrac{N_m}{2} \\[4mm] 3000 + \dfrac{N_m}{2}\dfrac{N_2}{n_2}h_m + n_2 v_m + \left\lfloor \dfrac{s+jL_m-\dfrac{N_m}{2}}{n_2} \right\rfloor N_2 + \left(\left(s+jL_m-\dfrac{N_m}{2}\right)\%n_2\right) + \dfrac{K}{2}, & s+jL_m \ge \dfrac{N_m}{2} \end{cases}$$

Formula B:

$$p_m = 3000 + \frac{N_m}{2}\frac{N_2}{n_2}h_m + n_2 v_m + \left\lfloor \left(s+jL_m - \frac{N_m}{2}\left\lfloor (s+jL_m)/\frac{N_m}{2}\right\rfloor\right)/n_2\right\rfloor N_2$$

$$+ \left(\left(s+jL_m - \frac{N_m}{2}\left\lfloor (s+jL_m)/\frac{N_m}{2}\right\rfloor\right)\%n_2\right) + \frac{K}{2}\left\lfloor (s+jL_m)/\frac{N_m}{2}\right\rfloor$$

Herein, j represents the index of the CDM group, $0 \le j \le \dfrac{N_m}{L_m} - 1$, s represents the index of the sequence in the CDM group, $0 \le s \le L_m - 1$, $L_m$ represents the size of the CDM group of the reference signal resource whose sequence number is m, $N_m$ represents a quantity of ports of the reference signal resource whose sequence number is m, $N_1$ and $N_2$ are respectively a quantity of ports in the first dimension in the polarization direction and a quantity of ports in the second dimension in the polarization direction, $h_m$ represents the sequence number in the first dimension in the port group corresponding to the reference signal resource whose sequence number is m, $0 \le h_m \le \dfrac{N_1}{n_1} - 1$, $v_m$ represents the sequence number in the second dimension in the port group corresponding to the reference signal resource whose sequence number is m, $0 \le v_m \le \dfrac{N_2}{n_2} - 1$, $n_1$ represents the quantity of ports in the first dimension in the polarization direction in the port group corresponding to each reference signal resource, $n_2$ represents the quantity of ports in the second dimension in the polarization direction in the port group corresponding to each reference signal resource, j, s, $L_m$, $h_m$, $v_m$, $n_1$, and $n_2$ are integers, $\lfloor \cdot \rfloor$ represents rounding down, and % represents a modulo operation.

In a possible design, $N_1=n_1$ or $N_2=n_2$.

In a possible design, when $N_1=n_1$ and/or $N_2=n_2$, K, $N_1$, $N_2$, $n_1$, and $n_2$ meet one or more of the following correspondences:
when K=48, $N_1$=8, $N_2$=3, $n_1$=4, and $n_2$=3; or when K=48, $N_1$=8, $N_2$=3, $n_1$=8, and $n_2$=1; or when K=48, $N_1$=6, $N_2$=4, $n_1$=6, and $n_2$=2; or when K=64, $N_1$=16, $N_2$=2, $n_1$=8, and $n_2$=2; or when K=64, $N_1$=16, $N_2$=2, $n_1$=16, and $n_2$=1; or when K=64, $N_1$=8, $N_2$=4, $n_1$=4, and $n_2$=4; or when K=64, $N_1$=8, $N_2$=4, $n_1$=8, and $n_2$=2; or when K=128, $N_1$=16, $N_2$=4, $n_1$=4, and $n_2$=4; or when K=128, $N_1$=16, $N_2$=4, $n_1$=16, and $n_2$=1; or when K=128, $N_1$=8, $N_2$=8, $n_1$=8, and $n_2$=2.

In a possible design, the quantities of ports respectively corresponding to the M reference signal resources are all N, and $N_m$=N; and/or sizes of CDM groups respectively corresponding to the M reference signal resources are all L, and $L_m$=L.

In a possible design, the M reference signal resources correspond to a total of K ports, and ports included in the port group corresponding to each reference signal resource are in one-to-one correspondence with a part of the K ports.

In a possible design, second indication information is sent to the terminal device. The second indication information indicates the quantity $n_1$ of ports in the first dimension in the polarization direction in the port group corresponding to each reference signal resource and/or the quantity $n_2$ of ports in the second dimension in the polarization direction in the port group corresponding to each reference signal resource.

In a possible design, sequence numbers respectively corresponding to the M reference signal resources are determined based on identifiers respectively corresponding to the M reference signal resources, or are determined based on a configuration sequence of the M reference signal resources.

In a possible design, third indication information is sent to the terminal device. The third indication information indicates a quantity $N_1$ of ports in the first dimension in the polarization direction and/or a quantity $N_2$ of ports in the second dimension in the polarization direction, $N_1$ and $N_2$ are positive integers, and K=2$N_1$ *$N_2$. The method further includes: determining the ports corresponding to the M reference signal resources and corresponding port indexes based on the quantity $N_1$ of ports in the first dimension in the polarization direction, the quantity $N_2$ of ports in the second dimension in the polarization direction, and the polarization direction.

According to a second aspect, this application provides a resource configuration method. The method may be performed by a terminal device or a module (for example, a chip) in the terminal device. The method includes: receiving first indication information from a network device, where the first indication information indicates M reference signal resources, in ports corresponding to the M reference signal resources, a smallest port index is 0+C, and a largest port index is K-1+C, K is a sum of quantities of ports respectively corresponding to the M reference signal resources, M is an integer greater than or equal to 2, C is a constant, and K is an integer greater than 32; receiving a reference signal on the M reference signal resources; and sending CSI to the network device, where the CSI is determined based on the reference signal.

According to the foregoing method, the terminal device receives the reference signal based on the M reference signal resources configured by the network device. In the ports corresponding to the reference signal resources, the smallest port index is 0+C, and the largest port index is K-1+C. Therefore, the terminal device determines that the ports corresponding to the M reference signal resources correspond to a same TRP, and the terminal device performs quantization reporting for a channel of one TRP and needs to report only one piece of CSI. Compared with a CJT solution in which the terminal device performs quantization reporting for channels of M TRPs and needs to feed back M pieces of CSI, this solution can reduce feedback overheads.

In a possible design, port indexes of any two of the M reference signal resources are different.

In a possible design, a port index $p_m$ corresponding to a reference signal resource whose sequence number is m is obtained based on an index of a code division multiplexing CDM group of the reference signal resource whose sequence number is m, an index of a sequence in the CDM group of the reference signal resource whose sequence number is m, a size of the CDM group of the reference signal resource whose sequence number is m, and quantities of ports respectively corresponding to reference signal resources whose sequence numbers are less than or equal to m, where 0≤m≤M-1, and m is an integer.

In a possible design, a correspondence between $p_m$ and all of the index of the CDM group of the reference signal resource whose sequence number is m, the index of the sequence in the CDM group of the reference signal resource whose sequence number is m, the size of the CDM group of the reference signal resource whose sequence number is m, and the quantities of ports respectively corresponding to the reference signal resources whose sequence numbers are less than or equal to m is as follows:

$$p_m = C + s + jL_m + \sum_{k=0}^{m-1} N_k$$

Herein, j represents the index of the CDM group, $0 \le j \le \frac{N_m}{L_m} - 1$, s represents the index of the sequence in the CDM group, $0 \leq s \leq L_m - N_m$ represents a quantity of ports of the reference signal resource whose sequence number is m, $L_m$ represents the size of the CDM group, $\sum_{k=0}^{m-1} N_k$ is a sum of quantities of ports respectively corresponding to reference signal resources whose sequence numbers are less than m, $N_m$ is the quantity of ports corresponding to the reference signal resource whose sequence number is m, and j and s are integers.

In a possible design, the quantities of ports respectively corresponding to the M reference signal resources are all N, K=M*N, and N is a positive integer.

In a possible design, a port index $p_m$ corresponding to a reference signal resource whose sequence number is m is obtained based on an index of a CDM group of the reference signal resource whose sequence number is m, an index of a sequence in the CDM group of the reference signal resource whose sequence number is m, a size of the CDM group of the reference signal resource whose sequence number is m, and a value of N, where 0≤m≤M-1, and m is an integer.

In a possible design, a correspondence between $p_m$ and the index of the CDM group of the reference signal resource whose sequence number is m, the index of the sequence in the CDM group of the reference signal resource whose sequence number is m, the size of the CDM group of the reference signal resource whose sequence number is m, and the value of N is as follows:

$$p_m = C + s + jL_m + mN$$

Herein, j represents the index of the CDM group, $0 \leq j \leq \frac{N}{L_m} - 1$, s represents the index of the sequence in the CDM group, $0 \leq s \leq L_m - 1$, $L_m$ represents the size of the CDM group, and j and s are integers.

In a possible design, a correspondence between $p_m$ and the index of the CDM group of the reference signal resource whose sequence number is m, the index of the sequence in the CDM group of the reference signal resource whose sequence number is m, the size of the CDM group of the reference signal resource whose sequence number is m, and the value of N is as follows:

$$p_m = C + (s + jL_m)M + m$$

Herein, j represents the index of the CDM group, $0 \leq j \leq \frac{N}{L_m} - 1$, s represents the index of the sequence in the CDM group, $0 \leq s \leq L_m - 1$, $L_m$ represents the size of the CDM group, and j and s are integers.

In a possible design, a port index $p_m$ corresponding to a reference signal resource whose sequence number is m is obtained based on a quantity $n_1$ of ports in a first dimension in a polarization direction in a port group corresponding to each reference signal resource, a quantity $n_2$ of ports in a second dimension in the polarization direction in the port group corresponding to each reference signal resource, and a location of a port group corresponding to the reference signal resource whose sequence number is m in port groups respectively corresponding to the M reference signal resources.

In a possible design, the port index $p_m$ corresponding to the reference signal resource whose sequence number is m is obtained based on an index of a CDM group of the reference signal resource whose sequence number is m, an index of a sequence in the CDM group of the reference signal resource whose sequence number is m, a size of the CDM group of the reference signal resource whose sequence number is m, a value of N, a quantity $n_1$ of ports in a first dimension in the polarization direction in the port group corresponding to each reference signal resource, a quantity $n_2$ of ports in a second dimension in the polarization direction in the port group corresponding to each reference signal resource, a sequence number in the first dimension in the port group corresponding to the reference signal resource whose sequence number is m, and a sequence number in the second dimension in the port group corresponding to the reference signal resource whose sequence number is m, 0≤m≤M-1, m is an integer, $K=2M*n_1*n_2$, quantities of ports in the first dimension in the port groups respectively corresponding to the M reference signal resources are the same, and quantities of ports in the second dimension in the port groups respectively corresponding to the M reference signal resources are the same.

In a possible design, the port index $p_m$ corresponding to the reference signal resource whose sequence number is m is determined based on Formula A or Formula B:

Formula A:

$$p_m = \begin{cases} 3000 + \dfrac{N_m}{2}\dfrac{N_2}{n_2} h_m + n_2 v_m + \left\lfloor \dfrac{s + jL_m}{n_2} \right\rfloor N_2 + ((s + jL_m)\%n_2), & s + jL_m < \dfrac{N_m}{2} \\[4ex] 3000 + \dfrac{N_m}{2}\dfrac{N_2}{n_2} h_m + n_2 v_m + \left\lfloor \dfrac{s + jL_m - \dfrac{N_m}{2}}{n_2} \right\rfloor N_2 + \left(\left(s + jL_m - \dfrac{N_m}{2}\right)\%n_2\right) + \dfrac{K}{2}, & s + jL_m \geq \dfrac{N_m}{2} \end{cases}$$

Formula B:

$$p_m = 3000 + \frac{N_m}{2}\frac{N_2}{n_2}h_m + n_2 v_m + \left\lfloor \left(s + jL_m - \frac{N_m}{2}\left\lfloor (s + jL_m)/\frac{N_m}{2}\right\rfloor\right)/n_2\right\rfloor N_2 + \left(\left(s + jL_m - \frac{N_m}{2}\left\lfloor (s + jL_m)/\frac{N_m}{2}\right\rfloor\right)\%n_2\right) + \frac{K}{2}\left\lfloor (s + jL_m)/\frac{N_m}{2}\right\rfloor.$$

Herein, j represents the index of the CDM group, $0 \le j \le \frac{N_m}{L_m} - 1$, s represents the index of the sequence in the CDM group, $0 \le s \le L_m - 1$, $L_m$ represents the size of the CDM group of the reference signal resource whose sequence number is m, $N_m$ represents a quantity of ports of the reference signal resource whose sequence number is m, $N_1$ and $N_2$ are respectively a quantity of ports in the first dimension in the polarization direction and a quantity of ports in the second dimension in the polarization direction, $h_m$ represents the sequence number in the first dimension in the port group corresponding to the reference signal resource whose sequence number is m, $0 \le h_m \le \frac{N_1}{n_1} - 1$, $v_m$ represents the sequence number in the second dimension in the port group corresponding to the reference signal resource whose sequence number is m, $0 \le v_m \le \frac{N_2}{n_2} - 1$, $v_m$ $n_1$ represents the quantity of ports in the first dimension in the polarization direction in the port group corresponding to each reference signal resource, $n_2$ represents the quantity of ports in the second dimension in the polarization direction in the port group corresponding to each reference signal resource, j, s, $L_m$, $h_m$, $v_m$, $n_1$, and $n_2$ are integers, $\lfloor \cdot \rfloor$ represents rounding down, and % represents a modulo operation.

In a possible design, $N_1 = n_1$ or $N_2 = n_2$.

In a possible design, when the quantity of ports $N_1$ in the first dimension is the same as the quantity $n_1$ of ports in the first dimension in the port group corresponding to each reference signal resource, and/or the quantity $N_2$ of ports in the second dimension is the same as the quantity $n_2$ of ports in the second dimension in the port group corresponding to each reference signal resource, K, $N_1$, $N_2$, $n_1$, and $n_2$ meet one or more of the following correspondences: when K=48, $N_1$=8, $N_2$=3, $n_1$=4, and $n_2$=3; or when K=48, $N_1$=8, $N_2$=3, $n_1$=8, and $n_2$=1; or when K=48, $N_1$=6, $N_2$=4, $n_1$=6, and $n_2$=2; or when K=64, $N_1$=16, $N_2$=2, $n_1$=8, and $n_2$=2; or when K=64, $N_1$=16, $N_2$=2, $n_1$=16, and $n_2$=1; or when K=64, $N_1$=8, $N_2$=4, $n_1$=4, and $n_2$=4; or when K=64, $N_1$=8, $N_2$=4, $n_1$=8, and $n_2$=2; or when K=128, $N_1$=16, $N_2$=4, $n_1$=4, and $n_2$=4; or when K=128, $N_1$=16, $N_2$=4, $n_1$=16, and $n_2$=1; or when K=128, $N_1$=8, $N_2$=8, $n_1$=8, and $n_2$=2.

In a possible design, the quantities of ports respectively corresponding to the M reference signal resources are all N, and $N_m$=N; and/or sizes of CDM groups respectively corresponding to the M reference signal resources are all L, and $L_m$=L.

In a possible design, the M reference signal resources correspond to a total of K ports, and ports included in the port group corresponding to each reference signal resource are in one-to-one correspondence with a part of the K ports.

In a possible design, second indication information is received from the network device. The second indication information indicates the quantity $n_1$ of ports in the first dimension in the polarization direction in the port group corresponding to each reference signal resource and/or the quantity $n_2$ of ports in the second dimension in the polarization direction in the port group corresponding to each reference signal resource.

In a possible design, sequence numbers respectively corresponding to the M reference signal resources are determined based on identifiers respectively corresponding to the M reference signal resources, or are determined based on a configuration sequence of the M reference signal resources.

In a possible design, third indication information is received from the network device. The third indication information indicates a quantity $N_1$ of ports in the first dimension in the polarization direction and/or a quantity $N_2$ of ports in the second dimension in the polarization direction, $N_1$ and $N_2$ are positive integers, and K=$2N_1$*$N_2$. The ports corresponding to the M reference signal resources and corresponding port indexes are determined based on the quantity $N_1$ of ports in the first dimension in the polarization direction, the quantity $N_2$ of ports in the second dimension in the polarization direction, and the polarization direction.

According to a third aspect, this application provides a resource configuration apparatus. The apparatus includes a transceiver unit and a processing unit. The processing unit is configured to determine first indication information. The transceiver unit is configured to: send the first indication information to a terminal device, send a reference signal on M reference signal resources, and receive CSI from the terminal device. The CSI is determined based on the reference signal. The first indication information indicates the M reference signal resources, in ports corresponding to the M reference signal resources, a smallest port index is 0+C, and a largest port index is K-1+C, K is a sum of quantities of ports respectively corresponding to the M reference signal resources, M is an integer greater than or equal to 2, C is a constant, and K is an integer greater than 32.

In a possible design, port indexes of any two of the M reference signal resources are different.

In a possible design, a port index $p_m$ corresponding to a reference signal resource whose sequence number is m is obtained based on an index of a code division multiplexing CDM group of the reference signal resource whose sequence number is m, an index of a sequence in the CDM group of the reference signal resource whose sequence number is m, a size of the CDM group of the reference signal resource whose sequence number is m, and quantities of ports respectively corresponding to reference signal resources whose sequence numbers are less than or equal to m, where 0≤m≤M-1, and m is an integer.

In a possible design, a correspondence between $p_m$ and all of the index of the CDM group of the reference signal resource whose sequence number is m, the index of the sequence in the CDM group of the reference signal resource whose sequence number is m, the size of the CDM group of the reference signal resource whose sequence number is m, and the quantities of ports respectively corresponding to the reference signal resources whose sequence numbers are less than or equal to m is as follows:

$$p_m = C + s + jL_m + \sum_{k=0}^{m-1} N_k$$

Herein, j represents the index of the CDM group, $0 \le j \le \frac{N_m}{L_m} - 1$, s represents the index of the sequence in the CDM group, $0 \le s \le L_m$ - $N_m$ represents a quantity of ports of the reference signal resource whose sequence number is m, $L_m$ represents the size of the CDM group, $\sum_{k=0}^{m-1} N_k$ is a sum of quantities of ports respectively corresponding to reference signal resources whose sequence numbers are less than m, $N_m$ is the quantity of ports corresponding to the reference signal resource whose sequence number is m, and j and s are integers.

In a possible design, the quantities of ports respectively corresponding to the M reference signal resources are all N, K=M*N, and N is a positive integer.

In a possible design, a port index $p_m$ corresponding to a reference signal resource whose sequence number is m is obtained based on an index of a CDM group of the reference signal resource whose sequence number is m, an index of a sequence in the CDM group of the reference signal resource whose sequence number is m, a size of the CDM group of the reference signal resource whose sequence number is m, and a value of N, where 0≤m≤M-1, and m is an integer.

In a possible design, a correspondence between $p_m$ and the index of the CDM group of the reference signal resource whose sequence number is m, the index of the sequence in the CDM group of the reference signal resource whose sequence number is m, the size of the CDM group of the reference signal resource whose sequence number is m, and the value of N is as follows:

$$p_m = C + s + jL_m + m\text{N}$$

Herein, j represents the index of the CDM group, $0 \le j \le \frac{\text{N}}{L_m} - 1$, s represents the index of the sequence in the CDM group, $0 \le s \le L_m$ - 1, $L_m$ represents the size of the CDM group, and j and s are integers.

In a possible design, a correspondence between $p_m$ and the index of the CDM group of the reference signal resource whose sequence number is m, the index of the sequence in the CDM group of the reference signal resource whose sequence number is m, the size of the CDM group of the reference signal resource whose sequence number is m, and the value of N is as follows:

$$p_m = C + (s + jL_m)M + m$$

Herein, j represents the index of the CDM group, $0 \le j \le \frac{\text{N}}{L_m} - 1$, s represents the index of the sequence in the CDM group, $0 \le s \le L_m$ - 1, $L_m$ represents the size of the CDM group, and j and s are integers.

In a possible design, a port index $p_m$ corresponding to a reference signal resource whose sequence number is m is obtained based on a quantity $n_1$ of ports in a first dimension in a polarization direction in a port group corresponding to each reference signal resource, a quantity $n_2$ of ports in a second dimension in the polarization direction in the port group corresponding to each reference signal resource, and a location of a port group corresponding to the reference signal resource whose sequence number is m in port groups respectively corresponding to the M reference signal resources.

In a possible design, the port index $p_m$ corresponding to the reference signal resource whose sequence number is m is obtained based on an index of a CDM group of the reference signal resource whose sequence number is m, an index of a sequence in the CDM group of the reference signal resource whose sequence number is m, a size of the CDM group of the reference signal resource whose sequence number is m, a value of N, a quantity $n_1$ of ports in a first dimension in the port group corresponding to each reference signal resource, a quantity $n_2$ of ports in a second dimension in the polarization direction in the port group corresponding to each reference signal resource, a sequence number in the first dimension in the polarization direction in the port group corresponding to the reference signal resource whose sequence number is m, and a sequence number in the second dimension in the port group corresponding to the reference signal resource whose sequence number is m, $0 \leq m \leq M-1$, m is an integer, $K=2M*n_1*n_2$, quantities of ports in the first dimension in the port groups respectively corresponding to the M reference signal resources are the same, and quantities of ports in the second dimension in the port groups respectively corresponding to the M reference signal resources are the same.

In a possible design, the port index $p_m$ corresponding to the reference signal resource whose sequence number is m is determined based on Formula A or Formula B:

Formula A:

$$p_m = \begin{cases} 3000 + \frac{N_m}{2}\frac{N_2}{n_2} h_m + n_2 v_m + \left\lfloor \frac{s + jL_m}{n_2} \right\rfloor N_2 + ((s + jL_m)\%n_2), s + jL_m < \frac{N_m}{2} \\ 3000 + \frac{N_m}{2}\frac{N_2}{n_2} h_m + n_2 v_m + \left\lfloor \frac{s + jL_m - \frac{N_m}{2}}{n_2} \right\rfloor N_2 + \left( \left( s + jL_m - \frac{N_m}{2} \right)\%n_2 \right) + \frac{K}{2}, s + jL_m \geq \frac{N_m}{2} \end{cases}$$

Formula B:

$$p_m = 3000 + \frac{N_m}{2}\frac{N_2}{n_2} h_m + n_2 v_m + \left\lfloor \left( s + jL_m - \frac{N_m}{2} \left\lfloor (s + jL_m)/\frac{N_m}{2} \right\rfloor \right)/n_2 \right\rfloor N_2 + \left( \left( s + \right. \right.$$

$$\left. \left. jL_m - \frac{N_m}{2} \left\lfloor (s + jL_m)/\frac{N_m}{2} \right\rfloor \right)\%n_2 \right) + \frac{K}{2} \left\lfloor (s + jL_m)/\frac{N_m}{2} \right\rfloor.$$

Herein, j represents the index of the CDM group, $0 \leq j \leq \frac{N_m}{L_m} - 1$, s represents the index of the sequence in the CDM group, $0 \leq s \leq L_m - 1$, $L_m$ represents the size of the CDM group of the reference signal resource whose sequence number is m, $N_m$ represents a quantity of ports of the reference signal resource whose sequence number is m, $N_1$ and $N_2$ are respectively a quantity of ports in the first dimension in the polarization direction and a quantity of ports in the second dimension in the polarization direction, $h_m$ represents the sequence number in the first dimension in the port group corresponding to the reference signal resource whose sequence number is m, $0 \leq h_m \leq \frac{N_1}{n_1} - 1$, $v_m$ represents the sequence number in the second dimension in the port group corresponding to the reference signal resource whose sequence number is m, $0 \leq v_m \leq \frac{N_2}{n_2} - 1$, $n_1$ represents the quantity of ports in the first dimension in the polarization direction in the port group corresponding to each reference signal resource, $n_2$ represents the quantity of ports in the second dimension in the polarization direction in the port group corresponding to each reference signal resource, j, s, $L_m$, $h_m$, $v_m$, $n_1$, and $n_2$ are integers, $\lfloor \cdot \rfloor$ represents rounding down, and % represents a modulo operation.

In a possible design, $N_1 = n_1$ or $N_2 = n_2$.

In a possible design, when $N_1 = n_1$ and/or $N_2 = n_2$, K, $N_1$, $N_2$, $n_1$, and $n_2$ meet one or more of the following correspondences:

when K=48, $N_1$=8, $N_2$=3, $n_1$=4, and $n_2$=3; or when K=48, $N_1$=8, $N_2$=3, $n_1$=8, and $n_2$=1; or when K=48, $N_1$=6, $N_2$=4, $n_1$=6, and $n_2$=2; or when K=64, $N_1$=16, $N_2$=2, $n_1$=8, and $n_2$=2; or when K=64, $N_1$=16, $N_2$=2, $n_1$=16, and $n_2$=1; or when K=64, $N_1$=8, $N_2$=4, $n_1$=4, and $n_2$=4; or when K=64, $N_1$=8, $N_2$=4, $n_1$=8, and $n_2$=2; or when K=128, $N_1$=16, $N_2$=4, $n_1$=4, and $n_2$=4; or when K=128, $N_1$=16, $N_2$=4, $n_1$=16, and $n_2$=1; or when K=128, $N_1$=8, $N_2$=8, $n_1$=8, and $n_2$=2.

In a possible design, the quantities of ports respectively corresponding to the M reference signal resources are all N, and $N_m$=N; and/or sizes of CDM groups respectively corresponding to the M reference signal resources are all L, and $L_m$=L.

In a possible design, the M reference signal resources correspond to a total of K ports, and ports included in the port group corresponding to each reference signal resource are in one-to-one correspondence with a part of the K ports.

In a possible design, the transceiver unit is configured to send second indication information to the terminal device. The second indication information indicates the quantity $n_1$ of ports in the first dimension in the polarization direction in the port group corresponding to each reference signal resource and/or the quantity $n_2$ of ports in the second dimension in the polarization direction in the port group corresponding to each reference signal resource.

In a possible design, sequence numbers respectively corresponding to the M reference signal resources are determined based on identifiers respectively corresponding to the M reference signal resources, or are determined based on a configuration sequence of the M reference signal resources.

In a possible design, the transceiver unit is configured to send third indication information is sent to the terminal device. The third indication information indicates a quantity $N_1$ of ports in the first dimension in the polarization direction and/or a quantity $N_2$ of ports in the second dimension in the polarization direction, $N_1$ and $N_2$ are positive integers, and $K=2N_1*N_2$. The processing unit is configured to determine the ports corresponding to the M reference signal resources and corresponding port indexes based on the quantity $N_1$ of ports in the first dimension in the polarization direction, the quantity $N_2$ of ports in the second dimension in the polarization direction, and the polarization direction.

According to a fourth aspect, this application provides a resource configuration apparatus. The apparatus includes a transceiver unit and a processing unit. The transceiver unit is configured to: receive first indication information from a network device, and receive a reference signal on M reference signal resources. The processing unit is configured to determine CSI. The CSI is determined based on the reference signal. The transceiver unit is configured to send the CSI to the network device. The first indication information indicates the M reference signal resources, in ports corresponding to the M reference signal resources, a smallest port index is 0+C, and a largest port index is K-1+C, K is a sum of quantities of ports respectively corresponding to the M reference signal resources, M is an integer greater than or equal to 2, C is a constant, and K is an integer greater than 32.

In a possible design, port indexes of any two of the M reference signal resources are different.

In a possible design, a port index $p_m$ corresponding to a reference signal resource whose sequence number is m is obtained based on an index of a code division multiplexing CDM group of the reference signal resource whose sequence number is m, an index of a sequence in the CDM group of the reference signal resource whose sequence number is m, a size of the CDM group of the reference signal resource whose sequence number is m, and quantities of ports respectively corresponding to reference signal resources whose sequence numbers are less than or equal to m, where $0 \leq m \leq M-1$, and m is an integer.

In a possible design, a correspondence between $p_m$ and all of the index of the CDM group of the reference signal resource whose sequence number is m, the index of the sequence in the CDM group of the reference signal resource whose sequence number is m, the size of the CDM group of the reference signal resource whose sequence number is m, and the quantities of ports respectively corresponding to the reference signal resources whose sequence numbers are less than or equal to m is as follows:

$$p_m = C + s + jL_m + \sum_{k=0}^{m-1} N_k$$

Herein, j represents the index of the CDM group, $0 \leq j \leq \frac{N_m}{L_m} - 1$, s represents the index of the sequence in the CDM group, $0 \leq s \leq L_m$ - $N_m$ represents a quantity of ports of the reference signal resource whose sequence number is m, $L_m$ represents the size of the CDM group, $\sum_{k=0}^{m-1} N_k$ is a sum of quantities of ports respectively corresponding to reference signal resources whose sequence numbers are less than m, $N_m$ is the quantity of ports corresponding to the reference signal resource whose sequence number is m, and j and s are integers.

In a possible design, the quantities of ports respectively corresponding to the M reference signal resources are all N, K=M*N, and N is a positive integer.

In a possible design, a port index $p_m$ corresponding to a reference signal resource whose sequence number is m is obtained based on an index of a CDM group of the reference signal resource whose sequence number is m, an index of a sequence in the CDM group of the reference signal resource whose sequence number is m, a size of the CDM group of the reference signal resource whose sequence number is m, and a value of N, where $0 \leq m \leq M-1$, and m is an integer.

In a possible design, a correspondence between $p_m$ and the index of the CDM group of the reference signal resource whose sequence number is m, the index of the sequence in the CDM group of the reference signal resource whose sequence number is m, the size of the CDM group of the reference signal resource whose sequence number is m, and the value of N is as follows:

$$p_m = C + s + jL_m + m\text{N}$$

Herein, j represents the index of the CDM group, $0 \leq j \leq \frac{\text{N}}{L_m} - 1$, s represents the index of the sequence in the CDM group, $0 \le s \le L_m$ - 1, $L_m$ represents the size of the CDM group, and j and s are integers.

In a possible design, a correspondence between $p_m$ and the index of the CDM group of the reference signal resource whose sequence number is m, the index of the sequence in the CDM group of the reference signal resource whose sequence number is m, the size of the CDM group of the reference signal resource whose sequence number is m, and the value of N is as follows:

$$p_m = C + (s + jL_m)M + m$$

Herein, j represents the index of the CDM group, $0 \le j \le \dfrac{N}{L_m} - 1$, s represents the index of the sequence in the CDM group, $0 \le s \le L_m$ - 1, $L_m$ represents the size of the CDM group, and j and s are integers.

In a possible design, a port index $p_m$ corresponding to a reference signal resource whose sequence number is m is obtained based on a quantity $n_1$ of ports in a first dimension in a polarization direction in a port group corresponding to each reference signal resource, a quantity $n_2$ of ports in a second dimension in the polarization direction in the port group corresponding to each reference signal resource, and a location of a port group corresponding to the reference signal resource whose sequence number is m in port groups respectively corresponding to the M reference signal resources.

In a possible design, the port index $p_m$ corresponding to the reference signal resource whose sequence number is m is obtained based on an index of a CDM group of the reference signal resource whose sequence number is m, an index of a sequence in the CDM group of the reference signal resource whose sequence number is m, a size of the CDM group of the reference signal resource whose sequence number is m, a value of N, a quantity $n_1$ of ports in a first dimension in the polarization direction in the port group corresponding to each reference signal resource, a quantity $n_2$ of ports in a second dimension in the polarization direction in the port group corresponding to each reference signal resource, a sequence number in the first dimension in the port group corresponding to the reference signal resource whose sequence number is m, and a sequence number in the second dimension in the port group corresponding to the reference signal resource whose sequence number is m, $0 \le m \le M-1$, m is an integer, $K = 2M*n_1*n_2$, quantities of ports in the first dimension in the port groups respectively corresponding to the M reference signal resources are the same, and quantities of ports in the second dimension in the port groups respectively corresponding to the M reference signal resources are the same.

In a possible design, the port index $p_m$ corresponding to the reference signal resource whose sequence number is m is determined based on Formula A or Formula B:

Formula A:

$$p_m = \begin{cases} 3000 + \dfrac{N_m}{2}\dfrac{N_2}{n_2}h_m + n_2 v_m + \left\lfloor \dfrac{s + jL_m}{n_2} \right\rfloor N_2 + ((s + jL_m)\%n_2), & s + jL_m < \dfrac{N_m}{2} \\ 3000 + \dfrac{N_m}{2}\dfrac{N_2}{n_2}h_m + n_2 v_m + \left\lfloor \dfrac{s + jL_m - \dfrac{N_m}{2}}{n_2} \right\rfloor N_2 + \left(\left(s + jL_m - \dfrac{N_m}{2}\right)\%n_2\right) + \dfrac{K}{2}, & s + jL_m \ge \dfrac{N_m}{2} \end{cases}$$

Formula B:

$$p_m = 3000 + \dfrac{N_m}{2}\dfrac{N_2}{n_2}h_m + n_2 v_m + \left\lfloor \left(s + jL_m - \dfrac{N_m}{2}\left\lfloor (s + jL_m)/\dfrac{N_m}{2}\right\rfloor\right)/n_2 \right\rfloor N_2 + \left(\left(s + jL_m - \dfrac{N_m}{2}\left\lfloor (s + jL_m)/\dfrac{N_m}{2}\right\rfloor\right)\%n_2\right) + \dfrac{K}{2}\left\lfloor (s + jL_m)/\dfrac{N_m}{2}\right\rfloor.$$

Herein, j represents the index of the CDM group, $0 \le j \le \dfrac{N_m}{L_m} - 1$, s represents the index of the sequence in the CDM group, $0 \le s \le L_m$ - 1, $L_m$ represents the size of the CDM group of the reference signal resource whose sequence number is m, $N_m$ represents a quantity of ports of the reference signal resource whose sequence number is m, $N_1$ and $N_2$ are respectively a quantity of ports in the first dimension in the polarization direction and a quantity of ports in the second dimension in the polarization direction, $h_m$ represents the sequence number in the first dimension in the port group corresponding to the reference signal resource whose sequence number is m, $0 \le h_m \le \dfrac{N_1}{n_1} - 1$, $v_m$ represents the sequence number in the second dimension in the port group corresponding to the reference signal resource whose sequence number is m, $0 \le v_m \le \dfrac{N_2}{n_2} - 1$, $n_1$ represents the quantity of ports in the first dimension in the polarization direction in the port group corresponding to each reference signal resource, $n_2$ represents the quantity of ports in the second dimension in the polarization direction in the port group corresponding to each reference signal resource, j, s, $L_m$, $h_m$, $v_m$, $n_1$, and $n_2$ are integers, $\lfloor \cdot \rfloor$ represents rounding down, and % represents a modulo operation.

In a possible design, $N_1 = n_1$ or $N_2 = n_2$.

In a possible design, when $N_1 = n_1$ and/or $N_2 = n_2$, K, $N_1$, $N_2$, $n_1$, and $n_2$ meet one or more of the following correspondences:

when K=48, $N_1$=8, $N_2$=3, $n_1$=4, and $n_2$=3; or when K=48, $N_1$=8, $N_2$=3, $n_1$=8, and $n_2$=1; or when K=48, $N_1$=6, $N_2$=4, $n_1$=6, and $n_2$=2; or when K=64, $N_1$=16, $N_2$=2, $n_1$=8, and $n_2$=2; or when K=64, $N_1$=16, $N_2$=2, $n_1$=16, and $n_2$=1; or when K=64, $N_1$=8, $N_2$=4, $n_1$=4, and $n_2$=4; or when K=64, $N_1$=8, $N_2$=4, $n_1$=8, and $n_2$=2; or when K=128, $N_1$=16, $N_2$=4, $n_1$=4, and $n_2$=4; or when K=128, $N_1$=16, $N_2$=4, $n_1$=16, and $n_2$=1; or when K=128, $N_1$=8, $N_2$=8, $n_1$=8, and $n_2$=2.

In a possible design, the quantities of ports respectively corresponding to the M reference signal resources are all N, and $N_m$=N; and/or sizes of CDM groups respectively corresponding to the M reference signal resources are all L, and $L_m$=L.

In a possible design, the M reference signal resources correspond to a total of K ports, and ports included in the port group corresponding to each reference signal resource are in one-to-one correspondence with a part of the K ports.

In a possible design, the transceiver unit is configured to receive second indication information from the network device. The second indication information indicates the quantity $n_1$ of ports in the first dimension in the polarization direction in the port group corresponding to each reference signal resource and/or the quantity $n_2$ of ports in the second dimension in the polarization direction in the port group corresponding to each reference signal resource.

In a possible design, sequence numbers respectively corresponding to the M reference signal resources are determined based on identifiers respectively corresponding to the M reference signal resources, or are determined based on a configuration sequence of the M reference signal resources.

In a possible design, the transceiver unit is configured to receive third indication information from the network device. The third indication information indicates a quantity $N_1$ of ports in the first dimension in the polarization direction and/or a quantity $N_2$ of ports in the second dimension in the polarization direction, $N_1$ and $N_2$ are positive integers, and $K=2N_1 \ast N_2$. The processing unit is configured to determine the ports corresponding to the M reference signal resources and corresponding port indexes based on the quantity $N_1$ of ports in the first dimension in the polarization direction, the quantity $N_2$ of ports in the second dimension in the polarization direction, and the polarization direction.

According to a fifth aspect, this application provides a communication apparatus. The apparatus may be used in a terminal device or a network device, and the apparatus includes units configured to perform the method according to any one of the foregoing aspects.

According to a sixth aspect, this application provides a communication device, including at least one processing element and at least one storage element. The at least one storage element is configured to store a program and data. The at least one processing element is configured to read and execute the program and the data that are stored in the storage element, so that the method provided in any one of the foregoing aspects of this application is implemented.

According to a seventh aspect, this application further provides a computer program. When the computer program runs on a computer, the computer is enabled to perform the method according to any one of the foregoing aspects.

According to an eighth aspect, this application provides a communication apparatus. The apparatus includes an interface circuit. The interface circuit is configured to provide a program or input and/or output of instructions for at least one processor. The at least one processor is configured to execute the program or the instructions, so that the communication apparatus can implement the method according to any one of the foregoing aspects.

In a possible manner, the communication apparatus includes the at least one memory. The at least one memory is configured to store the program or the instructions.

According to a ninth aspect, this application provides a computer storage medium. The storage medium stores a software program, and when the software program is read and executed by one or more processors, the method according to any one of the foregoing aspects may be implemented.

According to a tenth aspect, this application provides a computer program product including instructions. When the instructions are run on a computer, the computer is enabled to perform the method in any one of the foregoing aspects.

According to an eleventh aspect, a chip system is provided. The chip system includes at least one chip and a memory. The at least one chip is configured to read and execute a program stored in the memory, to implement the method according to any one of the first aspect.

According to a twelfth aspect, a communication system is provided. The system includes at least one terminal device and a network device. The terminal device performs the method according to any one of the second aspect, and the network device performs the method according to any one of the first aspect.

In this application, based on the implementations provided in the foregoing aspects, the implementations may be further combined to provide more implementations.

## BRIEF DESCRIPTION OF DRAWINGS

FIG. 1 is a diagram of an architecture of a mobile communication system to which an embodiment of this application is applied;

FIG. 2A is a diagram of CDM2 according to this application;

FIG. 2B is a diagram of CDM4 according to this application;

FIG. 2C is a diagram of CDM8 according to this application;

FIG. 3 is a diagram of an arrangement manner of ports corresponding to a CSI-RS resource that currently supports 32 ports according to this application;

FIG. 4 is an overview flowchart of a resource configuration method according to this application;

FIG. 5 is a diagram of an arrangement manner of ports corresponding to four CSI-RS resources according to this application;

FIG. 6 is a diagram of another arrangement manner of ports corresponding to four CSI-RS resources according to this application;

FIG. 7 is a diagram of a structure of a communication apparatus according to this application;

FIG. 8 is a diagram of a structure of another communication apparatus according to this application;

FIG. 9 is a diagram of an arrangement manner of ports corresponding to reference signal resources according to this application; and

FIG. 10 is a diagram of another arrangement manner of ports corresponding to reference signal resources according to this application.

## DESCRIPTION OF EMBODIMENTS

Embodiments of this application may be applied to various communication systems such as a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) system, or a new radio (new radio, NR) system; or applied to a future communication system or another similar communication system.

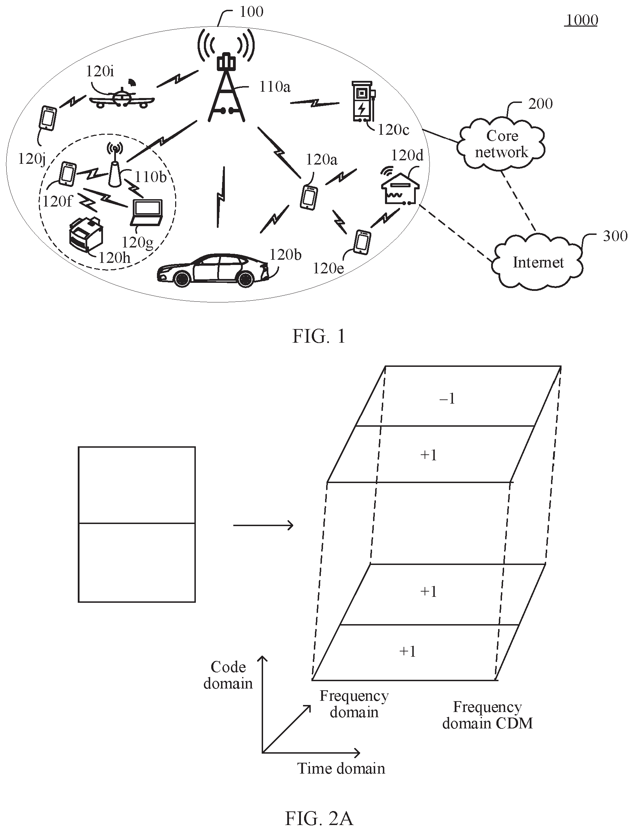

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal device (for example, 120a to 120j in FIG. 1). The terminal device is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. Terminal devices may be connected to each other in a wired or wireless manner, and radio access network devices may be connected to each other in a wired or wireless manner. FIG. 1 is merely a diagram. The communication system may further include another network device, for example, may further include a wireless relay device and a wireless backhaul device, which are not drawn in FIG. 1.

The radio access network device may be a base station (base station), an evolved NodeB (evolved NodeB, eNodeB), a transmission reception point (transmission reception point, TRP), a next-generation NodeB (next-generation NodeB, gNB) in a 5th generation (5th generation, 5G) mobile communication system, a next-generation base station in a 6th generation (6th generation, 6G) mobile communication system, a base station in a future mobile communication system, an access node in a Wi-Fi system, or the like; or may be a module or unit that completes a part of functions of a base station, for example, may be a central unit (central unit, CU), or may be a distributed unit (distributed unit, DU). The CU herein implements functions of the radio resource control protocol and the packet data convergence protocol (packet data convergence protocol, PDCP) of the base station, and may further implement functions of the service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, refer to technical specifications related to the 3rd generation partnership project (3rd generation partnership project, 3GPP). The radio access network device may be a macro base station (like 110a in FIG. 1), or may be a micro base station or an indoor base station (like 110b in FIG. 1), or may be a relay node or a donor node. A specific technology and a specific device form that are used by the radio access network device are not limited in this embodiment of this application. For ease of description, the following provides descriptions by using an example in which the network device is a radio access network device.

The terminal device may also be referred to as a terminal, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, smart grid, smart furniture, smart office, smart wearable, smart transportation, and smart city. The terminal device may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A specific technology and a specific device form that are used by the terminal device are limited in this embodiment of this application.

The network device and the terminal device may be fixed at a location, or may be movable. The network device and the terminal device may be deployed on land, including an indoor or outdoor device, a handheld device, or a vehicle-mounted device; or may be deployed on a water surface; or may be deployed on a plane, a balloon, or an artificial satellite. Application scenarios of the network device and the terminal device are not limited in this embodiment of this application.

Roles of the network device and the terminal device may be relative. For example, the helicopter or uncrewed aerial vehicle 120i in FIG. 1 may be configured as a mobile network device. For the terminal device 120j that accesses the radio access network 100 via 120i, the uncrewed aerial vehicle 120i is a network device. However, for the network device 110a, 120i is a terminal device, that is, 110a and 120i communicate with each other based on a radio air interface protocol. Certainly, 110a and 120i may alternatively communicate with each other based on an interface protocol between network devices. In this case, compared with 110a, 120i is also a network device. Therefore, both the network device and the terminal device may be collectively referred to as communication apparatuses. 110a and 110b in FIG. 1 may be referred to as communication apparatuses having a function of the network device, and 120a to 120j in FIG. 1 may be referred to as communication apparatuses having a function of the terminal device.

Communication may be performed between the network device and the terminal device, between network devices, or between terminal devices by using a licensed spectrum, an unlicensed spectrum, or both a licensed spectrum and an unlicensed spectrum; may be performed by using a spectrum below 6 gigahertz (gigahertz, GHz); may be performed by using a spectrum above 6 GHz; or may be performed by using both a spectrum below 6 GHz and a spectrum above 6 GHz. A spectrum resource used for wireless communication is not limited in this embodiment of this application.

In this embodiment of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. The function of the terminal device may alternatively be performed by a module (for example, a chip or a modem) in the terminal device, or may be performed by an apparatus including a function of the terminal device.

In this embodiment of this application, the network device sends a downlink signal or downlink information to the terminal device. The downlink information is carried on a downlink channel. The terminal device sends an uplink signal or uplink information to the network device. The uplink information is carried on an uplink channel. To communicate with the network device, the terminal device needs to establish a wireless connection to a cell controlled by the network device. The cell that establishes the wireless connection to the terminal device is referred to as a serving cell of the terminal device. When the terminal device communicates with the serving cell, the terminal device is further interfered by a signal from a neighboring cell.

It may be understood that, in this embodiment of this application, a physical downlink shared channel (physical downlink shared channel, PDSCH), a physical downlink control channel (physical downlink control channel, PDCCH), a physical uplink control channel (physical uplink control channel, PUCCH), and a physical uplink shared channel (physical uplink shared channel, PUSCH) are merely respectively examples of a downlink data channel, a downlink control channel, an uplink control channel, and an uplink data channel. In different systems and different scenarios, a data channel and a control channel may have different names. This is not limited in this embodiment of this application.

The following briefly describes basic concepts in this application.

(1) Reference signal

In a communication system, a pilot may also be referred to as a reference signal (reference signal, RS), and is a signal that is provided by a transmit end for a receive end for channel estimation or channel sounding and that is known by both the transmit end and the receive end. Reference signals are classified into uplink reference signals and downlink reference signals. Unless otherwise specified, the reference signal in this application is a downlink reference signal. For example, the downlink reference signal may be a CSI-RS, a demodulation reference signal (demodulation reference signal, DMRS). This is not limited in this application. Correspondingly, a reference signal resource is a CSI-RS resource or a DMRS resource.

In the following embodiments, an example in which the reference signal resource is a CSI-RS resource is merely used for description. For example, the CSI-RS resource includes at least one of resources such as a time-frequency resource, an antenna port, a power resource, and a scrambling code of the CSI-RS. For example, a network device may send the CSI-RS to a terminal based on the CSI-RS resource, and correspondingly, the terminal may receive the CSI-RS based on the CSI-RS resource. In embodiments of this application, one or more antenna ports corresponding to the CSI-RS resource may also be understood as one or more antenna ports included in the CSI-RS resource.

(2) Channel state information (channel state information, CSI)

When a signal is transmitted from a transmit end to a receive end through a radio channel, the signal may fade with a distance due to scattering, reflection, or energy attenuation. The CSI is used to represent a feature of a radio channel, and may include at least one of a channel quality indicator (channel quality indicator, CQI), a precoding matrix indicator (precoding matrix indicator, PMI), a CSI-RS resource indicator (CSI-RS resource indicator, CRI), a synchronization signal/physical broadcast channel block resource indicator (synchronization signal/physical broadcast channel block resource indicator, SSBRI), a layer indicator (layer indicator, LI), a rank indicator (rank indicator, RI), an L1-reference signal received power (reference signal received power, RSRP), and an L1-signal to interference plus noise ratio (signal to interference plus noise ratio, SINR). The CSI may be sent by a terminal device to a network device through a PUCCH or a PUSCH.

In embodiments of this application, if there is no logical conflict, "CSI" or "CSI report (CSI report)" may be interchanged, and "reporting", "feedback", and "sending" may be interchanged.

(3) CSI configuration

A current CSI configuration may include a CSI report configuration (CSI-ReportConfig). CSI-ReportConfig includes a channel measurement resource (resourcesForChannelMeasurement) and a CSI-RS resource used to configure channel measurement, and is associated with a CSI resource configuration (CSI-ResourceConfig) based on a CSI resource configuration identifier (CSI-ResourceConfigId). For example, resourcesForChannelMeasurement may carry CSI-ResourceConfigId used for channel measurement, and CSI-ReportConfig further includes a codebook configuration (codebookConfig).

CSI-ResourceConfig is used to configure related information of a reference signal resource, for example, a time-frequency resource, an antenna port, a power resource, or a scrambling code of a reference signal. For example, CSI-ResourceConfig may include a CSI resource set list (CSI-RS-ResourceSetList), and is a configuration associated with an NZP-CSI-RS resource set (NZP-CSI-RS-ResourceSet) based on a non-zero power (non-zero power, NZP) CSI-RS resource set identifier (NZP-CSI-RS-ResourceSetId). The NZP-CSI-RS-ResourceSet includes an nzp-CSI-RS-Resources field, and is associated with at least one NZP-CSI-RS-Resource field based on at least one NZP-CSI-RS resource identifier (NZP-CSI-RS-ResourceId).

codebookConfig is used to configure information related to a MIMO codebook, for example, a codebook type, a quantity $N_1$ of ports in a first dimension, and a quantity $N_2$ of ports in a second dimension.

It should be understood that CSI-ReportConfig, CSI-ResourceConfig, or codebookConfig may further include other fields. Examples are not enumerated herein.

(4) Antenna port (port)

The antenna port may also be briefly referred to as a port. The antenna port may be understood as a transmit antenna that is identified by a receive device, or as a transmit antenna that can be spatially distinguished. Unless otherwise specified, the antenna port in embodiments of this application is a logical antenna port instead of a physical antenna port. For example, a reference signal transmitted by a network device through an antenna port A may be used by a terminal device to estimate a feature of a channel from the antenna port A to the terminal device.

An antenna port group may also be briefly referred to as a port group, and may also be understood as an antenna port set or an antenna port array. The antenna port group may include one or more antenna ports.

(5) Code division multiplexing (code division multiplexing, CDM)

A plurality of antenna ports may share a time-frequency resource. This is implemented by using an orthogonal code (orthogonal cover code, OCC) sequence in time domain and frequency domain. This manner is referred to as CDM. In addition, this may be implemented by using another sequence. This is not limited in this application.

For example, CDM may specifically include four types:

Type 1: noCDM: Code division multiplexing is not performed.

Type 2: CDM2: No multiplexing is performed in time domain, and multiplexing is performed only in frequency domain. Two subcarriers are occupied in frequency domain. A diagram of corresponding mapping is shown in FIG. 2A. In a resource block, two ports in a same CMD group use the same two consecutive subcarriers, and different OCC codes are superimposed on a time-frequency resource for the two ports. As shown in FIG. 2A, +1 and +1 are respectively superimposed on two subcarriers for a 1st port, and +1 and -1 are respectively superimposed on the two subcarriers for a 2nd port.

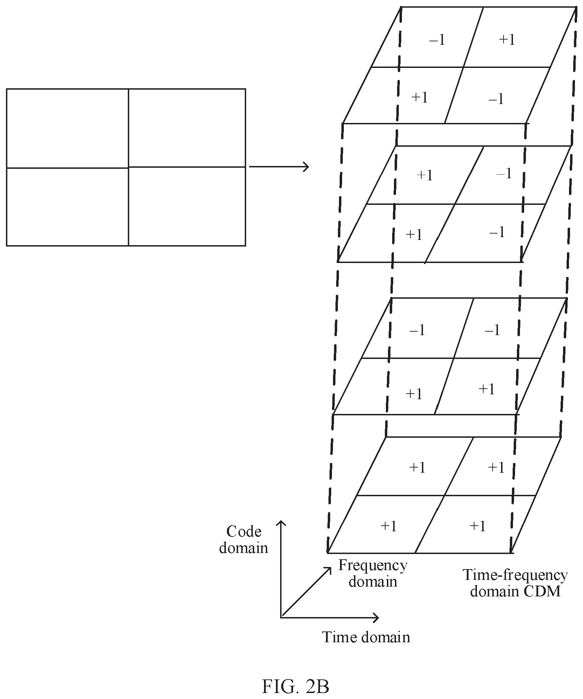

Type 3. CDM4: Multiplexing is performed in both time domain and frequency domain. Two subcarriers are occupied in frequency domain, and two symbols are occupied in time domain. A diagram of corresponding mapping is shown in FIG. 2B. In a resource block, four ports in a same CMD group use the same two consecutive subcarriers and two consecutive symbols, and different OCC codes are superimposed on a time-frequency resource for the four ports. As shown in FIG. 2B, for a 1st port, +1 and +1 are respectively superimposed on two symbols on a 1st subcarrier, and +1 and +1 are respectively superimposed on two symbols on a 2nd subcarrier; and for a 2nd port, +1 and -1 are respectively superimposed on the two symbols on the 1st subcarrier, and +1 and -1 are respectively superimposed on the two symbols on the 2nd subcarrier, and so on.

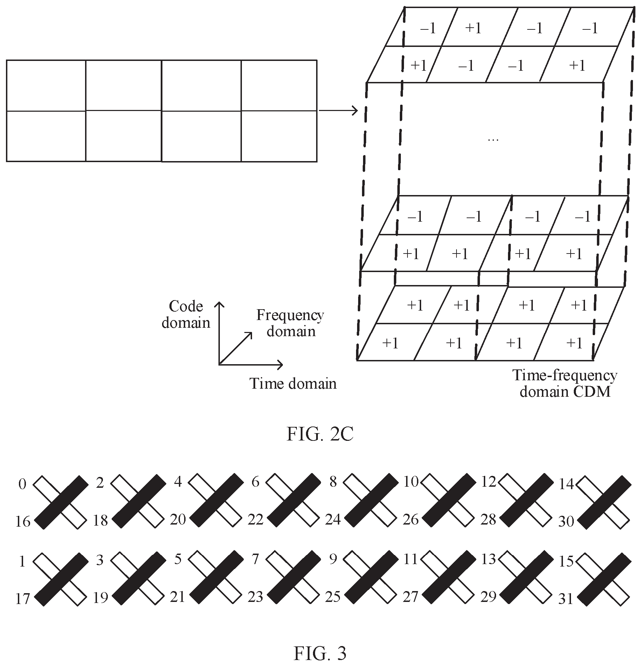

Type 4. CDM8: Multiplexing is performed in both time domain and frequency domain. Two subcarriers are occupied in frequency domain, and four symbols are occupied in time domain. A diagram of corresponding mapping is shown in FIG. 2C. In a resource block, eight ports in a same CMD group use the same two consecutive subcarriers and four consecutive symbols, and different OCC codes are superimposed on a time-frequency resource for the eight ports. As shown in FIG. 2C, for a 1st port, +1, +1, +1, and +1 are respectively superimposed on four symbols on a 1st subcarrier, and +1, +1, +1, and +1 are respectively superimposed on four symbols on a 2nd subcarrier; for a 2nd port, +1, +1, +1, and +1 are respectively superimposed on the four symbols on the 1st subcarrier, and -1, -1, -1, and -1 are respectively superimposed on the four symbols on the 2nd subcarrier; and so on.

A current CSI-RS resource supports a maximum of only 32 ports, and the ports corresponding to the CSI-RS resource are in the following sequence:

$$p = 3000 + s + jL$$

$$j = 0, 1, ..., N/L - 1$$

$$s = 0, 1, ..., L - 1$$

Herein, p represents a port index of the CSI-RS resource, j represents an index of a CDM group of the CSI-RS resource, s represents an index of a sequence in the CDM group of the CSI-RS resource, N represents a total quantity of ports corresponding to the CSI-RS resource, and L represents a size of the CDM group of the CSI-RS resource. For ease of description, the foregoing formula is referred to as Formula 0 below.

For example, a network device may configure a quantity $N_1$ of ports in a first dimension and a quantity $N_2$ of ports in a second dimension in a codebook configuration (CodebookConfig), $N = 2N_1N_2$, and N is the quantity of ports corresponding to the CSI-RS resource. The ports corresponding to the CSI-RS resource are arranged in a sequence of the second dimension, the first dimension, and a polarization direction. For example, the first dimension is a horizontal direction, the second dimension is a vertical direction, $N_1 = 8$, and $N_2 = 2$. The horizontal direction may also be referred to as a horizontal dimension, and the vertical dimension may also be referred to as a vertical direction. FIG. 3 is a diagram of an arrangement manner of ports corresponding to a CSI-RS resource that supports 32 ports. Each cross in FIG. 3 is a pair of dual-polarized antennas.

In FIG. 3, if C=0, and the port index starts from 0, it is determined, in a sequence of the vertical direction, the horizontal direction, and the polarization direction, that a port index of a port in a first polarization direction in a 1st row and a 1st column is 0, a port index of a port in the first polarization direction in a 2nd row and the 1st column is 1, a port index of a port in the first polarization direction in the 1st row and the 2nd column is 2, and a port index of a port in the first polarization direction in the 2nd row and the 2nd column is 3; by analogy, a port index of a port in the first polarization direction in the 1st row and an 8th column is 14, a port index of a port in the first polarization direction in the 2nd row and the 8th column is 15, a port index of a port in a second polarization direction in the 1st row and the 1st column is 16, and a port index of a port in the second polarization direction in the 2nd row and the 1st column is 17; and by analogy, a port index of a port in the second polarization direction in the 1st row and the 8th column is 30, and a port index of a port in the second polarization direction in the 2nd row and the 8th column is 31.

If a quantity of ports supported by a single CSI-RS resource is extended from 32 to 64 or more, the network device needs to greatly change an existing implementation to support sending of CSI-RSs with more ports. In this case, a terminal device further needs to greatly change the existing implementation to support measurement of the CSI-RS with more ports.

In addition, in current coherent joint transmission (coherent joint transmission, CJT), the network device may configure a plurality of CSI-RS resources for the terminal device, and each CSI-RS resource corresponds to one transmission reception point (transmission reception point, TRP). The terminal device performs joint measurement based on a channel of TRPs respectively corresponding to the plurality of CSI-RS resources. According to a current CJT solution, one CSI-RS resource corresponds to one TRP, and different CSI-RS resources correspond to different TRPs. Alternatively, it is described as follows: Ports of one CSI-RS resource correspond to one TRP, and ports of different CSI-RS resources correspond to different TRPs; or ports of one CSI-RS resource belong to one TRP, and ports of different CSI-RS resources belong to different TRPs.

However, actually, the several different CSI-RS resources may correspond to a same TRP, or because there is a strong correlation between channels, the several different CSI-RS resources may be considered as corresponding to one TRP. In the current CJT solution, different CSI-RS resources cannot correspond to a same TRP. Consequently, CSI feedback information is redundant, and feedback overheads are large. There is room for further optimization. For example, if four CSI-RS resources correspond to four TRPs, the terminal device needs to feed back CSI for each TRP, that is, feed back four pieces of CSI. Consequently, feedback overheads are large.

Based on an architecture of a network system shown in FIG. 1 and content described in the foregoing related technologies, an embodiment of this application provides a possible resource configuration method. An example in which the resource configuration method is performed by a network device and a terminal device is used for description below. For example, the network device may be the access network device 110a or the access network device 110b in FIG. 1. The terminal device may be any terminal shown in FIG. 1. In addition, it should be understood that the network device may alternatively be replaced with a communication apparatus having a function of the network device, or may be replaced with a chip, a unit, or a module in the communication apparatus having the function of the network device. Alternatively, the terminal device may be replaced with a communication apparatus having a function of the terminal device, or a chip, a unit, or a module in the communication apparatus having the function of the terminal device.

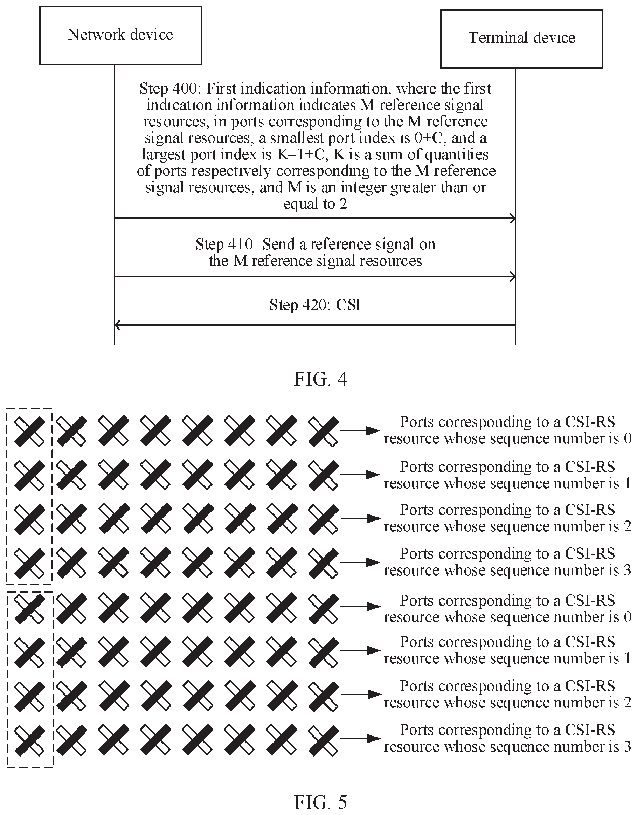

FIG. 4 is an example of a possible schematic flowchart of a resource configuration method according to an embodiment of this application. As shown in FIG. 4, the method includes the following steps.

Step 400: A network device sends first indication information to a terminal device. Correspondingly, the terminal device receives the first indication information from the network device.

The first indication information indicates M reference signal resources, in ports corresponding to the M reference signal resources, a smallest port index is 0+C, and a largest port index is K-1+C, K is a sum of quantities of ports respectively corresponding to the M reference signal resources, M is an integer greater than or equal to 2, C is a constant, and K is an integer greater than 32. For example, a value of C may be 3000 or another value. The value of C may be a constant predefined in a protocol, or may be a constant determined by the network device and indicated to the terminal device. This is not limited in this application.

In the ports corresponding to the M reference signal resources, the smallest port index is 0+C, and the largest port index is K-1+C. It may also be understood that in the ports corresponding to the M reference signal resources, a difference between the largest port index and the smallest port index is K-1. Therefore, the terminal device and the network device may determine that the ports corresponding to the M reference signal resources correspond to a same TRP, instead of a case in which the ports corresponding to the M reference signal resources correspond to M TRPs. Alternatively, it is described as follows: The terminal device and the network device may enable the ports corresponding to the M reference signal resources to correspond a same TRP; or the terminal device and the network device may enable the ports corresponding to the M reference signal resources to belong a same TRP; or the terminal device and the network device may determine that the ports corresponding to the M reference signal resources belong to a same TRP.

For example, port indexes of any two of the M reference signal resources are different, and this may also be understood as that any two of the M reference signal resources do not have a same port index.

It may be understood that each reference signal resource corresponds to at least one port, and port indexes respectively corresponding to the at least one port are different from each other. For example, a first reference signal resource corresponds to X ports, the X ports are in one-to-one correspondence with X port indexes, a second reference signal resource 2 corresponds to Y ports, and the Y ports are in one-to-one correspondence with Y port indexes. X and Y are positive integers. The first reference signal resource and the second reference signal resource are any two of the M reference signal resources, and the X port indexes and the Y port indexes are different from each other.

For example, if the network device configures four reference signal resources, and each reference signal resource supports 32 ports, it can be learned from Formula 0 that port indexes corresponding to each reference signal resource range from C to C+31. Therefore, any two different reference signal resources in the four reference signal resources have a same port index. Each reference signal resource includes a port index s. C includes the port index, and s is an integer.

However, in the method provided in this application, it is assumed that the network device configures four reference signal resources, each reference signal resource supports 32 ports, and in ports corresponding to the four reference signal resources, a smallest port index is C, and a largest port index is 127+C. Therefore, any two different reference signal resources in the four reference signal resources do not have a same port index, or any two different reference signal resources have different port indexes. Alternatively, it may be described as follows: Four reference signal resources correspond to a total of 128 ports, and port indexes respectively corresponding to the 128 ports are different from each other.

For example, the first indication information may be carried by using NZP-CSI-RS-ResourceSet.

Step 410: The network device sends a reference signal on the M reference signal resources. Correspondingly, the terminal device receives the reference signal on the M reference signal resources.

Step 420: The terminal device sends CSI to the network device, and correspondingly, the network device receives the CSI from the terminal device. The CSI is determined based on the reference signal in step 410.

For example, after the network device sends the reference signal on the M reference signal resources, the terminal device determines one piece of CSI based on the received reference signal, and reports the one piece of CSI to the network device.

According to the foregoing method, the network device may configure the M reference signal resources, and a total quantity of ports corresponding to the reference signal resources is greater than 32. In the ports corresponding to the reference signal resources, the smallest port index is 0+C, and the largest port index is K-1+C. Therefore, port indexes of the ports corresponding to the reference signal resources may be uniformly numbered, instead of a case in which a port index of a port corresponding to each reference signal resource is separately numbered. In this way, the network device and the terminal device can determine that the ports corresponding to the M reference signal resources correspond to a same TRP, and the M reference signal resources can support a larger quantity of antenna ports. This may be applied to an FDD system of an antenna array with more than 32 antenna ports.

Because the terminal device determines that the ports corresponding to the M reference signal resources correspond to a same TRP, the terminal device performs quantization reporting for a channel of one TRP and needs to report only one piece of CSI. Compared with a CJT solution in which the terminal device performs quantization reporting for channels of M TRPs and needs to feed back M pieces of CSI, this solution can reduce feedback overheads. In addition, the CSI may reflect a complete spatial domain dimension feature, and can more accurately reflect a channel feature.

Further, in a possible implementation, the network device may further send third indication information to the terminal device. The third indication information indicates a quantity $N_1$ of ports in a first dimension and/or a quantity $N_2$ of ports in a second dimension, $N_1$ and $N_2$ are positive integers, and $K=2N_1*N_2$. For example, the third indication information may be carried by using a codebook configuration.

When the third indication information indicates the quantity $N_1$ of ports in the first dimension or the quantity $N_2$ of ports in the second dimension, the terminal device may further calculate, based on $K=2N_1*N_2$, a quantity of ports in another dimension that is not indicated. For example, when the third indication information indicates the quantity $N_1$ of ports in the first dimension, but does not indicate the quantity of ports in the second dimension, the terminal device may calculate the quantity $N_2$ of ports in the second dimension based on the quantity $N_1$ of ports in the first dimension and $K=2N_1*N_2$. For another example, when the third indication information indicates the quantity $N_2$ of ports in the second dimension but does not indicate the quantity of ports in the first dimension, the terminal device calculates the quantity $N_1$ of ports in the first dimension based on the quantity $N_1$ of ports in the first dimension and $K=2N_1*N_2$. The network device and the terminal device may determine the ports corresponding to the M reference signal resources and corresponding port indexes based on the quantity $N_1$ of ports in the first dimension, the quantity $N_2$ of ports in the second dimension, and a polarization direction. Alternatively, it may be described as follows: A specific arrangement manner of the ports corresponding to the M reference signal resources, a topology structure of a group of ports corresponding to the M reference signal resources, or an antenna array corresponding to the M reference signal resources may be determined based on the quantity $N_1$ of ports in the first dimension, the quantity $N_2$ of ports in the second dimension, and a polarization direction.

For example, it is assumed that the first dimension is a horizontal direction, and the second dimension is a vertical direction. It can be learned from the foregoing that K is a sum of quantities of ports respectively corresponding to the M reference signal resources. In other words, the M reference signal resources correspond to a total of K ports. In this case, the K ports may be arranged in a sequence of the second dimension, the first dimension, and the polarization direction; or the K ports may be arranged in a sequence of the first dimension, the second dimension, and the polarization direction. Further, a specific arrangement manner of the K ports may be determined. It may be understood that the K ports may alternatively be arranged in another sequence. This is not limited in this application.

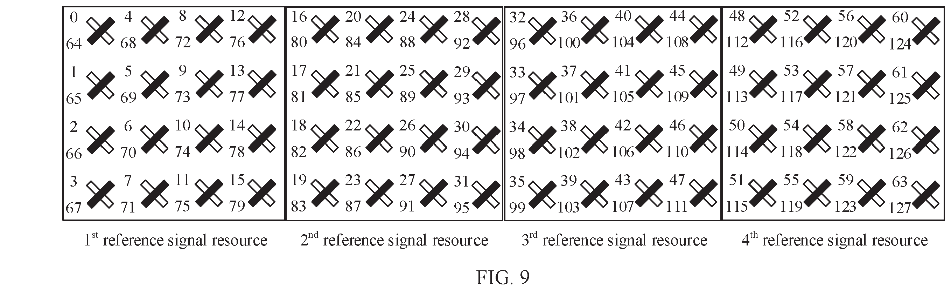

For example, port arrangement is performed for the M reference signal resources in Method 3. Port arrangement of each reference signal resource is in one-to-one correspondence with partial port arrangement of the K ports. In other words, the M reference signal resources correspond to a total of the K ports, and ports included in a port group corresponding to each reference signal resource are in one-to-one correspondence with a part of the K ports. As shown in FIG. 9, for example, the K ports in FIG. 9 are arranged in a sequence of the second dimension, the first dimension, and the polarization direction. A 1st reference signal resource corresponds to ports 0 to 15 in a 1st polarization direction and ports 64 to 79 in a 2nd polarization direction. It may be considered that, port arrangement of the reference signal resource may be determined based on configurations n1 and n2 of the reference signal resource and a location of the reference signal in the entire K ports, and port numbers of the reference signal resource are in one-to-one correspondence with port numbers at same locations in the entire K ports. In other words, a port index $p_m$ corresponding to a reference signal resource whose sequence number is m is obtained based on a quantity $n_1$ of ports in the first dimension in a port group corresponding to each reference signal resource, a quantity $n_2$ of ports in the second dimension in the port group corresponding to each reference signal resource, and a location of a port group corresponding to the reference signal resource whose sequence number is m in port groups respectively corresponding to the M reference signal resources. For details, refer to Formula A, Formula B, Formula A', Formula B', and Formula C.

In this application, $n_1$ represents the quantity of ports in the first dimension in a polarization direction in the port group corresponding to each reference signal resource, which may also be briefly referred to as the quantity of ports in the first dimension in the port group corresponding to each reference signal resource. $n_2$ represents the quantity of ports in the second dimension in the polarization direction in the port group corresponding to each reference signal resource, which may also be briefly referred to as the quantity of ports in the second dimension in the port group corresponding to each reference signal resource. $N_1$ represents a quantity of ports in the first dimension in the polarization direction, which may also be briefly referred to as the quantity of ports in the first dimension. $N_2$ represents a quantity of ports in the second dimension in the polarization direction, which may also be briefly referred to as a port in the second dimension.

For example, when n2=N2, in each polarization direction in each reference signal resource, arrangement is performed in a sequence of the second dimension and then the first dimension; or in each polarization direction in each reference signal resource, arrangement is performed in a sequence of the first dimension and then the second dimension. Ports in a first polarization direction in all reference signal resources are first arranged, and then ports in a second polarization direction in all the reference signal resources are arranged. As shown in FIG. 9, a sequence is arranging a port in the first polarization direction in the 1st reference signal resource, a port in the first polarization direction in a 2nd reference signal resource, ..., a port in the first polarization direction in an Mth reference signal resource, a port in the second polarization direction in the 1st reference signal resource, ..., and a port in the second polarization direction in the Mth reference signal resource.

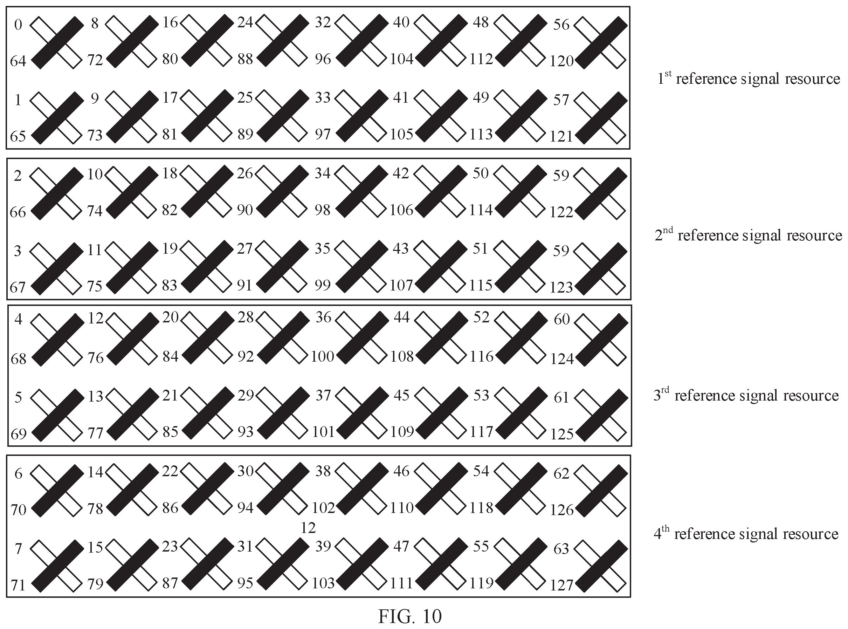

For example, when n1=N1, in each polarization direction in each reference signal resource, sequential arrangement is performed based on the second dimension or the first dimension. Ports in the first polarization direction in all reference signal resources are first arranged, and then ports in the second polarization direction in all the reference signal resources are arranged. As shown in the following figure, a sequence is arranging $n_2$ ports in a 1st column in the first polarization direction in the 1st reference signal resource, $n_2$ ports in a 1st column in the first polarization direction in the 2nd reference signal resource, ..., and $n_2$ ports in a 1st column in the first polarization direction in the Mth reference signal resource; $n_2$ ports in a 2nd column in the first polarization direction in the 1st reference signal resource, n2 ports in a 2nd column in the first polarization direction in the 2nd reference signal resource, ..., and $n_2$ ports in a 2nd column in the first polarization direction in the Mth reference signal resource; ...; arranging $n_2$ ports in an $N_1$th column port in the first polarization direction in the 1st reference signal resource, $n_2$ ports in an $N_1$th column in the first polarization direction in the 2nd reference signal resource, ..., and $n_2$ ports in an $N_1$th column in the first polarization direction in the Mth reference signal resource; a port in the second polarization direction in the 1st reference signal resource; $n_2$ ports in a 1st column in the second polarization direction in the first reference signal resource, $n_2$ ports in a 1st column in the second polarization direction in the 2nd reference signal resource, ..., and $n_2$ ports in a 1st column port in the second polarization direction in the Mth reference signal resource; and $n_2$ ports in a 2nd column in the second polarization direction in the 1st reference signal resource, $n_2$ ports in a 2nd column in the second polarization direction in the 2nd reference signal resource, ..., and $n_2$ ports in a 2nd column in the second polarization direction in the Mth reference signal resource; and arranging $n_2$ ports in an $N_1$th column in the second polarization direction in the 1st reference signal resource, $n_2$ ports in an $N_1$th column in the second polarization direction in the 2nd reference signal resource, ..., and $n_2$ ports in $N_1$th column in the second polarization direction in the Mth reference signal resource, for example, as shown in FIG. 10.

For example, when the quantity of ports $N_1$ in the first dimension is the same as the quantity $n_1$ of ports in the first dimension in the port group corresponding to each reference signal resource, and/or the quantity $N_2$ of ports in the second dimension is the same as the quantity $n_2$ of ports in the second dimension in the port group corresponding to each reference signal resource, K, $N_1$, $N_2$, $n_1$, and $n_2$ meet one or more of the following correspondences:

when K=48, $N_1$=8, $N_2$=3, $n_1$=4, and $n_2$=3; or
when K=48, $N_1$=8, $N_2$=3, $n_1$=8, and $n_2$=1; or
when K=48, $N_1$=6, $N_2$=4, $n_1$=6, and $n_2$=2; or
when K=64, $N_1$=16, $N_2$=2, $n_1$=8, and $n_2$=2; or
when K=64, $N_1$=16, $N_2$=2, $n_1$=16, and $n_2$=1; or
when K=64, $N_1$=8, $N_2$=4, $n_1$=4, and $n_2$=4; or

when K=64, $N_1$=8, $N_2$=4, $n_1$=8, and $n_2$=2; or
when K=128, $N_1$=16, $N_2$=4, $n_1$=4, and $n_2$=4; or
when K=128, $N_1$=16, $N_2$=4, $n_1$=16, and $n_2$=1; or
when K=128, $N_1$=8, $N_2$=8, $n_1$=8, and $n_2$=2.

According to such a port allocation manner, a terminal may perform channel measurement by using one or more reference signal resources. Based on a reference signal resource configuration supported in an existing protocol, the following correspondences among K, $N_1$, $N_2$, $n_1$, and $n_2$ may be supported. It may be understood that Table a, Table b, and Table c are merely examples, and are not intended to limit this application.

Table a

| K | $(N_1, N_2)$ | $(n_1, n_2)$ |
|---|---|---|
| 48 | (8, 3) | (4, 3) and (8, 1) |
| | (6, 4) | (6, 2) |
| 64 | (16, 2) | (8, 2) and (16, 1) |
| | (8, 4) | (4, 4) and (8, 2) |
| 128 | (16, 4) | (4, 4), (8, 2), and (16, 1) |
| | (8, 8) | (4, 4) and (8, 2) |

Optionally, when only $N_1=n_1$ or N2=n2 is supported, K, $N_1$, $N_2$, $n_1$, and $n_2$ meet the following correspondences, which may be Table b or Table c.

Table b

| K | $(N_1, N_2)$ | $(n_1, n_2)$ |
|---|---|---|
| 48 | (8, 3) | (4, 3) and (8, 1) |
| | (6, 4) | (6, 2) |
| 64 | (16, 2) | (8, 2) and (16, 1) |
| | (8, 4) | (4, 4) and (8, 2) |
| 128 | (16, 4) | (4, 4) and (16, 1) |
| | (8, 8) | (8, 2) |

Table c

| K | $(N_1, N_2)$ | $(n_1, n_2)$ |
|---|---|---|
| 48 | (8, 3) | (4, 3) |
| | (6, 4) | (6, 2) |
| 64 | (16, 2) | (8, 2) and (16, 1) |
| | (8, 4) | (4, 4) and (8, 2) |
| 128 | (16, 4) | (4, 4) and (16, 1) |
| | (8, 8) | (8, 2) |

Therefore, the network device determines a specific arrangement manner of the ports corresponding to the M reference signal resources by configuring the quantity $N_1$ of ports in the first dimension and the quantity $N_2$ of ports in the second dimension.

For example, a port index corresponding to each of the M reference signal resources may be determined in manners including but not limited to Manner 1 to Manner 3. It should be noted that, the reference signal resource whose sequence number is m in the M reference signal resources is merely used as an example for description below. $0 \leq m \leq M-1$, and m is an integer. Therefore, the reference signal resource whose sequence number is m may be any one of the M reference signal resources. It should be noted that, in this application, sequence numbers respectively corresponding to the M reference signal resources start from 0, and a sequence number range is from 0 to M-1. In addition, the sequence numbers respectively corresponding to the M reference signal resources may alternatively start from 1, and the sequence number range is from 1 to M. An example in which the sequence numbers respectively corresponding to the M reference signal resources start from 0 is merely used for description, and is not intended to limit this application. It may be understood that the following indexes are also described by using an example in which the indexes start from 0. In addition, the indexes may alternatively start from 1. This is not limited in this application.

In a possible implementation, the sequence numbers respectively corresponding to the M reference signal resources are determined based on identifiers respectively corresponding to the M reference signal resources, or are determined based on a configuration sequence of the M reference signal resources. For example, the sequence numbers respectively corresponding to the M reference signal resources may be determined in descending order or ascending order based on the identifiers respectively corresponding to the M reference signal resources. It may be understood that the foregoing manner of determining the sequence numbers respectively corresponding to the M reference signal resources is merely an example, and the sequence numbers respectively corresponding to the M reference signal resources may be alternatively determined in another manner. This is not limited in this application.

Manner 1: The port index $p_m$ corresponding to the reference signal resource whose sequence number is m is obtained based on an index of a CDM group of the reference signal resource whose sequence number is m, an index of a sequence in the CDM group of the reference signal resource whose sequence number is m, a size of the CDM group of the reference signal resource whose sequence number is m, and quantities of ports respectively corresponding to reference signal resources whose sequence numbers are less than or equal to m.

In a possible implementation, a correspondence between $p_m$ and all of the index of the CDM group of the reference signal resource whose sequence number is m, the index of the sequence in the CDM group of the reference signal resource whose sequence number is m, the size of the CDM group of the reference signal resource whose sequence number is m, and the quantities of ports respectively corresponding to the reference signal resources whose sequence numbers are less than or equal to m may be represented by using a formula, or represented in another manner, for example, by using a table. When the correspondence is presented by using a table, the table may include $p_m$, the index of the CDM group of the reference signal resource whose sequence number is m, and the index of the sequence in the CDM group of the reference signal resource whose sequence number is m. Optionally, the table may further include the size of the CDM group of the reference signal resource whose sequence number is m, a sum of quantities of ports respectively corresponding to reference signal resources whose sequence numbers are less than m, and quantities of ports respectively corresponding to reference signal resources whose sequence numbers are equal to m.

For example, the correspondence between $p_m$ and all of the index of the CDM group of the reference signal resource whose sequence number is m, the index of the sequence in the CDM group of the reference signal resource whose sequence number is m, the size of the CDM group of the reference signal resource whose sequence number is m, and the quantities of ports respectively corresponding to the reference signal resources whose sequence numbers are less than or equal to m is as follows:

$$p_m = C + s + jL_m + \sum_{k=0}^{m-1} N_k \qquad \text{Formula 1}$$

Herein, j represents the index of the CDM group of the reference signal resource whose sequence number is m, $0 \le j \le \frac{N_m}{L_m} - 1$, s represents the index of the sequence in the CDM group of the reference signal resource whose sequence number is m, $0 \le s \le L_m$ - $N_m$ represents a quantity of ports of the reference signal resource whose sequence number is m, $L_m$ represents the size of the CDM group of the reference signal resource whose sequence number is m, $\sum_{k=0}^{m-1} N_k$ is the sum of the quantities of ports respectively corresponding to reference signal resources whose sequence numbers are less than m, $N_k$ is the quantity of ports corresponding to the reference signal resource whose sequence number is k, and j and s are integers. The foregoing formula is referred to as Formula 1 below.

The size of the CDM group of the reference signal resource whose sequence number is m may also be configured by using radio resource control (radio resource control, RRC) signaling. $0 \le j \le \frac{N_m}{L_m} - 1$ may also be denoted as $j = 0, 1, \ldots, \frac{N_m}{L_m} - 1$. $0 \le s \le L_m$ - 1 may also be denoted as s = 0, 1, $\cdots$ $L_m$ - 1.

It should be understood that the M reference signal resources are numbered from 1. When the M reference signal resources are numbered from 1, a sum range of a last item in Formula 1 is from 1 to m. Formula 1 may be replaced with the following:

$$p_m = C + s + jL_m + \sum_{k=1}^{m} N_k$$

According to Manner 1, the port indexes respectively corresponding to the M reference signal resources may be determined conveniently. Each reference signal resource cannot form an independent dual-polarized antenna array. Therefore, the reference signal resource cannot be reused.

Manner 2: The quantities of ports respectively corresponding to the M reference signal resources are all N, K=M*N, and N is a positive integer. The port index $p_m$ corresponding to the reference signal resource whose sequence number is m is obtained based on an index of a CDM group of the reference signal resource whose sequence number is m, an index of a sequence in the CDM group of the reference signal resource whose sequence number is m, a size of the CDM group of the reference signal resource whose sequence number is m, and a value of N.

It may be understood that the quantities of ports respectively corresponding to the M reference signal resources are all N. In other words, the quantities of ports respectively corresponding to the M reference signal resources are the same.

In a possible implementation, a correspondence between $p_m$ and all of the index of the CDM group of the reference signal resource whose sequence number is m, the index of the sequence in the CDM group of the reference signal resource whose sequence number is m, the size of the CDM group of the reference signal resource whose sequence number is m, and a value of N may be represented by using a formula, or represented in another manner, for example, by using a table. When the correspondence is presented by using a table, the table may include $p_m$, the index of the CDM group of the reference signal resource whose sequence number is m, and the index of the sequence in the CDM group of the reference signal resource whose sequence number is m. Optionally, the table may further include the size of the CDM group of the reference signal resource whose sequence number is m.

In an example, the correspondence between $p_m$ and the index of the CDM group of the reference signal resource whose sequence number is m, the index of the sequence in the CDM group of the reference signal resource whose sequence number is m, the size of the CDM group of the reference signal resource whose sequence number is m, and the value of N is as follows:

$$p_m = C + s + jL_m + m\text{N} \qquad\qquad \text{Formula 2}$$

Herein, j represents the index of the CDM group of the reference signal resource whose sequence number is m, $0 \leq j \leq \frac{\text{N}}{L_m} - 1$, s represents the index of the sequence in the CDM group of the reference signal resource whose sequence number is m, $0 \leq s \leq L_m$ - 1, $L_m$ represents the size of the CDM group of the reference signal resource whose sequence number is m, and j and s are integers. The foregoing formula is referred to as Formula 2 below.

Formula 2 may be considered as a simplified version of Formula 1. To be specific, when the quantities of ports respectively corresponding to the M reference signal resources are all N, Formula 1 may be simplified into Formula 2.

It should be understood that the M reference signal resources are numbered from 1, and when 1≤m≤M, Formula 2 may be replaced with the following:

$$p_m = C + s + jL_m + (m-1)\text{N}$$

According to the foregoing example, when the quantities of ports respectively corresponding to the M reference signal resources are the same, the port indexes respectively corresponding to the M reference signal resources may be determined conveniently. Each reference signal resource cannot form an independent dual-polarized antenna array. Therefore, the reference signal resource cannot be reused.

In another example, the correspondence between $p_m$ and the index of the CDM group of the reference signal resource whose sequence number is m, the index of the sequence in the CDM group of the reference signal resource whose sequence number is m, the size of the CDM group of the reference signal resource whose sequence number is m, and the value of N is as follows:

$$p_m = C + (s + jL_m)M + m \qquad\qquad \text{Formula 3}$$

Herein, j represents the index of the CDM group of the reference signal resource whose sequence number is m, $0 \leq j \leq \frac{\text{N}}{L_m} - 1$, s represents the index of the sequence in the CDM group of the reference signal resource whose sequence number is m, $0 \leq s \leq L_m$ - 1, $L_m$ represents the size of the CDM group of the reference signal resource whose sequence number is m, and j and s are integers. The foregoing formula is referred to as Formula 3 below.

It should be understood that the M reference signal resources are numbered from 1. When the M reference signal resources are numbered from 1, Formula 3 may be replaced with the following:

$$p_m = C + (s + jL_m)M + m - 1$$

Formula 3 may be understood as follows: It can be learned from the foregoing that K is the sum of the quantities of ports respectively corresponding to the M reference signal resources. In other words, the M reference signal resources correspond to a total of K ports. The K ports are grouped by using 2M ports as one group, and $\frac{N_1 N_2}{M}$ groups may be obtained. $K=2N_1N_2$. For example, it is assumed that the K ports are arranged in a sequence of the second dimension, the first dimension, and the polarization direction. 2M ports in each port group may form a port group with $M/\min(N_2, M)$ ports in the first dimension, $\min(N_2, M)$ ports in the second dimension, and two polarization directions. In other words, one port group may occupy M locations. $M/\min(N_2, M)$ locations are occupied in the first dimension, and $\min(N_2, M)$ locations are occupied in the second dimension. The M locations are arranged in a sequence of the second dimension first and then the first dimension, and two antenna ports at an $(m+1)^{th}$ location (or a location m) are ports corresponding to the reference signal resource whose sequence number is m.

As shown in FIG. 5, it is assumed that the first dimension is a horizontal direction, the second dimension is a vertical direction, $N_1=8$, and $N_2=8$. Quantities of ports respectively corresponding to four reference signal resources are 32. In other words, the four reference signal resources correspond to a total of 128 ports. 2M=8 ports are used as one group, and the 128 ports are grouped to obtain $\frac{N_1 N_2}{M}=16$ groups. Eight ports in each port group may form a port group with $M/\min(N_2, M)=1$ port in the first dimension and $\min(N_2, M)=4$ ports in the second dimension. In other words, each port group includes eight antenna ports at four consecutive locations in the vertical direction. Because one location is occupied in the first dimension, the four locations occupied by each port group are arranged in a sequence in the second dimension, that is, arranged in the vertical direction. Therefore, in each port group, two ports at a $1^{st}$ location (a location 0) in the vertical direction are ports corresponding to a reference signal resource whose sequence number is 0, two ports at a $2^{nd}$ location (a location 1) in the vertical direction are ports corresponding to a reference signal resource whose sequence number is 1, two ports at a $3^{rd}$ location (a location 2) in the vertical direction are ports corresponding to a reference signal resource whose sequence number is 2, and two ports at a $4^{th}$ location (a location 3) in the vertical direction are ports corresponding to a reference signal resource whose sequence number is 3.

It can be learned from FIG. 5 that each column includes eight locations. In other words, two port groups may be formed. In the foregoing manner, all ports in a $1^{st}$ row and all ports in a $5^{th}$ row are ports corresponding to the reference signal resource whose sequence number is 0, all ports in a $2^{nd}$ row and all ports in a $6^{th}$ row are ports corresponding to the reference signal resource whose sequence number is 1, all ports in a $3^{rd}$ row and all ports in a $7^{th}$ row are ports corresponding to the reference signal resource whose sequence number is 2, and all ports in a $4^{th}$ row and all ports in an $8^{th}$ row are ports corresponding to the reference signal resource whose sequence number is 3.

Therefore, a port corresponding to each reference signal resource may correspond to one array, and the array is a uniform dual-polarized planar array. In this way, a port corresponding to a single reference signal resource may alternatively be used for separate quantization reporting, so that the reference signal resource can be reused. In other words, each of the M reference signal resources may be used as a separate measurement resource, and is to be used by a terminal device that does not support channel measurement of more than 32 ports. In actual deployment, measurement capabilities of terminal devices are different, and some terminal devices support only a reference signal resource of no more than 32 ports. Therefore, according to the foregoing manner, the reference signal resource can be reused, and overheads of the reference signal resource can be reduced.

According to the foregoing example, a formula of the port index is simple, and is easy to implement, and the reference signal resource can be reused.

Manner 3: The quantities of ports respectively corresponding to the M reference signal resources are all N, K=M*N, and N is a positive integer. The port index $p_m$ corresponding to the reference signal resource whose sequence number is m is obtained based on an index of a CDM group of the reference signal resource whose sequence number is m, an index of a sequence in the CDM group of the reference signal resource whose sequence number is m, a size of the CDM group of the reference signal resource whose sequence number is m, a value of N, a quantity $n_1$ of ports in a first dimension in the port group corresponding to each reference signal resource, a quantity $n_2$ of ports in a second dimension in the port group corresponding to each reference signal resource, a sequence number in the first dimension in the port group corresponding to the reference signal resource whose sequence number is m, and a sequence number in the second dimension in the port group corresponding to the reference signal resource whose sequence number is m, $K=2M*n_1*n_2$, quantities of ports in the first dimension in the port groups respectively corresponding to the M reference signal resources are the same, and quantities of ports in the second dimension in the port groups respectively corresponding to the M reference signal resources are the same.

It may be understood that the quantities of ports respectively corresponding to the M reference signal resources are all N. In other words, the quantities of ports respectively corresponding to the M reference signal resources are the same.

In a possible implementation, a correspondence between $p_m$ and all of the index of the CDM group of the reference signal resource whose sequence number is m, the index of the sequence in the CDM group of the reference signal resource whose sequence number is m, the size of the CDM group of the reference signal resource whose sequence number is m, the value of N, the quantity $n_1$ of ports in the first dimension in the port group corresponding to each reference signal resource, the quantity $n_2$ of ports in the second dimension in the port group corresponding to each reference signal resource, the sequence number in the first dimension in the port group corresponding to the reference signal resource whose sequence number is m, and the sequence number in the second dimension in the port group corresponding to the reference signal resource whose sequence number is m may be represented by using a formula, or represented in another manner, for example, by using a table. When the correspondence is presented by using a table, the table may include $p_m$, the index of the CDM group of the reference signal resource whose sequence number is m, the index of the sequence in the CDM group of the reference signal resource whose sequence number is m, the sequence number in the first dimension in the port group corresponding to the reference signal resource whose sequence number is m, and the sequence number in the second dimension in the port group corresponding to the reference signal resource whose sequence number is m. Optionally, the table may further include the size of the CDM group of the reference signal resource whose sequence number is m, the value of N, the quantity $n_1$ of ports in the first dimension in the port group corresponding to each reference signal resource, and the quantity $n_2$ of ports in the second dimension in the port group corresponding to each reference signal resource.

For example, the correspondence between the port index $p_m$ corresponding to the reference signal resource whose sequence number is m and all of the index of the CDM group of the reference signal resource whose sequence number is m, the index of the sequence in the CDM group of the reference signal resource whose sequence number is m, the size of the CDM group of the reference signal resource whose sequence number is m, the value of N, the quantity $n_1$ of ports in the first dimension in the port group corresponding to each reference signal resource, the quantity $n_2$ of ports in the second dimension in the port group corresponding to each reference signal resource, the sequence number in the first dimension in the port group corresponding to the reference signal resource whose sequence number is m, and the sequence number in the second dimension in the port group corresponding to the reference signal resource whose sequence number is m is as follows:

Formula A:

$$
p_m = \begin{cases} 3000 + \dfrac{N_m}{2}\dfrac{N_2}{n_2} h_m + n_2 v_m + \left\lfloor \dfrac{s + jL_m}{n_2} \right\rfloor N_2 + \left( (s + jL_m)\%n_2 \right), & s + jL_m < \dfrac{N_m}{2} \\[4mm] 3000 + \dfrac{N_m}{2}\dfrac{N_2}{n_2} h_m + n_2 v_m + \left\lfloor \dfrac{s + jL_m - \dfrac{N_m}{2}}{n_2} \right\rfloor N_2 + \left( \left( s + jL_m - \dfrac{N_m}{2} \right)\%n_2 \right) + \dfrac{K}{2}, & s + jL_m \geq \dfrac{N_m}{2} \end{cases}
$$

Formula B:

$$
p_m = 3000 + \frac{N_m}{2}\frac{N_2}{n_2} h_m + n_2 v_m + \left\lfloor \left( s + jL_m - \frac{N_m}{2}\left\lfloor (s + jL_m)/\frac{N_m}{2} \right\rfloor \right)/n_2 \right\rfloor N_2
$$
$$
+ \left( \left( s + jL_m - \frac{N_m}{2}\left\lfloor (s + jL_m)/\frac{N_m}{2} \right\rfloor \right)\%n_2 \right) + \frac{K}{2}\left\lfloor (s + jL_m)/\frac{N_m}{2} \right\rfloor
$$

Herein, j represents the index of the CDM group, $0 \leq j \leq \dfrac{N_m}{L_m} - 1$, s represents the index of the sequence in the CDM group, $0 \leq s \leq L_m - 1$, $L_m$ represents the size of the CDM group of the reference signal resource whose sequence number is m, $N_1$ and $N_2$ are respectively the quantity of ports in the first dimension and the quantity of ports in the second dimension, $h_m$ represents the sequence number in the first dimension in the port group corresponding to the reference signal resource whose sequence number is m, $0 \leq h_m \leq \dfrac{N_1}{n_1} - 1$, $v_m$ represents the sequence number in the second dimension in the port group corresponding to the reference signal resource whose sequence number is m, $0 \leq v_m \leq \dfrac{N_2}{n_2} - 1$, the quantity of ports in the first dimension in the port group corresponding to each reference signal resource is $n_1$, and the quantity of ports in the second dimension in the port group corresponding to each reference signal resource is $n_2$. j, s, $L_m$, $h_m$, $v_m$, $n_1$, and $n_2$ are integers, $\lfloor \cdot \rfloor$ represents rounding down, and % represents a modulo operation.

When only N1=n1 or N2=n2 is considered, Formula A may be further simplified into Formula A', and Formula B may be further simplified into Formula B':

Formula A':

$$p_m = \begin{cases} 3000 + \frac{N_m}{2} h_m + n_2 v_m + \lfloor (s + jL_m)/n_2 \rfloor N_2 + ((s + jL_m)\% n_2), s + jL_m < \frac{N_m}{2} \\ 3000 + \frac{N_m}{2} h_m + n_2 v_m + \left\lfloor \left(s + jL_m - \frac{N_m}{2}\right)/n_2 \right\rfloor N_2 + \left(\left(s + jL_m - \frac{N_m}{2}\right)\% n_2\right) + K/2, s + jL_m \geq \frac{N_m}{2} \end{cases}$$

Formula B':

$$p_m = 3000 + \frac{N_m}{2} h_m + n_2 v_m + \left\lfloor \left(s + jL_m - \frac{N_m}{2}\left\lfloor (s + jL_m)/\frac{N_m}{2}\right\rfloor\right)/n_2 \right\rfloor N_2 + \left(\left(s + \right.\right.$$

$$\left.\left. jL_m - \frac{N_m}{2}\left\lfloor (s + jL_m)/\frac{N_m}{2}\right\rfloor\right)\% n_2\right) + \frac{K}{2}\left\lfloor (s + jL_m)/\frac{N_m}{2}\right\rfloor \qquad \text{Formula B'}$$

Only when N2=n2 is considered, there is a correspondence between the port index $p_m$ corresponding to the reference signal resource whose sequence number is m and all of the index of the CDM group of the reference signal resource whose sequence number is m, the index of the sequence in the CDM group of the reference signal resource whose sequence number is m, the size of the CDM group of the reference signal resource whose sequence number is m, the value of N, and a quantity M of reference signal resources. This may be specifically expressed as Formula C and Formula D.

Formula C:

$$p_m = \begin{cases} 3000 + s + jL_m + \frac{N_m}{2} m, s + jL_m < \frac{N_m}{2} \\ 3000 + s + jL_m + \frac{N_m}{2} m + K/2, s + jL_m \geq \frac{N_m}{2} \end{cases}$$

Formula D:

$$p_m = 3000 + s + jL_m + \frac{N_m}{2} m + \frac{K}{2}\left\lfloor (s + jL_m)/\frac{N_m}{2}\right\rfloor \qquad \text{Formula (4)}$$

Herein, $h_m$ and $v_m$ indicate locations of the port group corresponding to the reference signal resource whose sequence number is m in port groups corresponding to the M reference signal resources. For example, $h_m = 0, \ldots, \frac{N_1}{n_1} - 1, v_m = 0, \ldots, \frac{N_2}{n_2} - 1$.

In a possible implementation, the quantities of ports respectively corresponding to the M reference signal resources are all N, and $N_m$=N; and/or sizes of CDM groups respectively corresponding to the M reference signal resources are all L, and $L_m$=L.

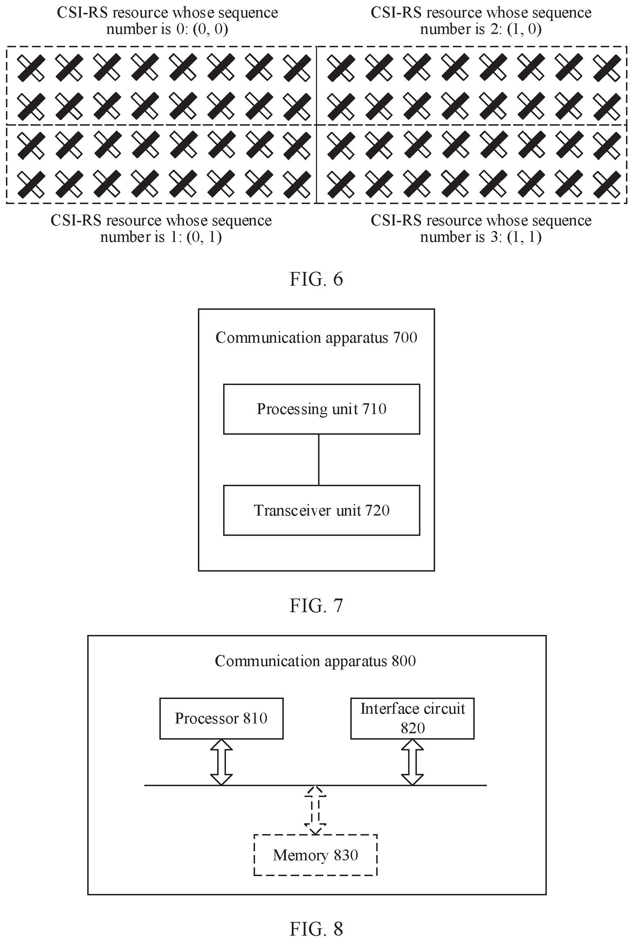

As shown in FIG. 6, it is assumed that the first dimension is the horizontal direction, the second dimension is the vertical direction, $N_1$=16, and $N_2$=4. Quantities of ports respectively corresponding to four reference signal resources are 32. In other words, the four reference signal resources correspond to a total of 128 ports. A quantity of ports in the first dimension in a port group corresponding to each reference signal resource is 8, and a quantity of ports in the second dimension is 2. It is assumed that the four reference signal resources are arranged in the vertical direction and then in the horizontal direction. $h_m$ and $v_m$ corresponding to a reference signal resource whose sequence number is 0 are $h_m = 0$ and $v_m = 0$, and a location of the reference signal resource whose sequence number is 0 is denoted as (0, 0). $h_m$ and $v_m$ corresponding to a reference signal resource whose sequence number is 1 are $h_m = 0$ and $v_m = 1$, and a location of the reference signal resource whose sequence number is 1 is denoted as (0, 1). $h_m$ and $v_m$ corresponding to a reference signal resource whose sequence number is 2 are $h_m = 1$ and $v_m = 0$, and a location of the reference signal resource whose sequence number is 2 is denoted as (1, 0). $h_m$ and $v_m$ corresponding to a reference signal resource whose sequence number is 3 are $h_m = 1$ and $v_m = 1$, and a location of the reference signal resource whose sequence number is 3 is denoted as (1, 1). Therefore, locations of the four reference signal resources, namely, an arrangement manner of the four reference signal resources, may be determined.

It should be understood that an arrangement sequence of the port groups corresponding to the M reference signal resources may be an arrangement in a sequence of the second dimension and then the first dimension, or may be an arrangement in a sequence of the first dimension and then the second dimension, or may be an arrangement in another manner as agreed based on a protocol, or may be indicated by the network device by using signaling.

The quantities of ports in the first dimension in the port groups respectively corresponding to the M reference signal resources are the same. In other words, the quantity of ports in the first dimension in the port group corresponding to each reference signal resource is $n_1$. The quantities of ports in the second dimension in the port groups respectively corresponding to the M reference signal resources are the same. In other words, the quantity of ports in the second dimension in the port group corresponding to each reference signal resource is $n_2$.

In a possible implementation, the network device may further send second indication information to the terminal device. The second indication information indicates the quantity $n_1$ of ports in the first dimension in the port group corresponding to each reference signal resource and/or the quantity $n_2$ of ports in the second dimension in the port group corresponding to each reference signal resource. $K = 2M*n_1*n_2$.

When the second indication information indicates the quantity $n_1$ of ports in the first dimension in the port group corresponding to each reference signal resource, or the quantity $n_2$ of ports in the second dimension in the port group corresponding to each reference signal resource, the terminal device may calculate the quantity of ports in the other dimension in the port group corresponding to each reference signal resource based on $K = 2M*n_1*n_2$.

For example, the second indication information may be carried by using a resource configuration (for example, CSI-ResourceConfig), a reporting configuration (for example, reportConfig), or a codebook configuration (for example, codebookConfig). In addition, because quantities of ports of reference signal resources associated with the configurations are the same, configurations of the M reference signal resources may share a same parameter. Therefore, $n_1$ and $n_2$ may need to be configured only one time, and $n_1$ and $n_2$ do not need to be configured M times, thereby reducing signaling overheads.

Therefore, the network device configures the quantity $n_1$ of ports in the first dimension in the port group corresponding to each reference signal resource and/or the quantity $n_2$ of ports in the second dimension in the port group corresponding to each reference signal resource, to determine a specific arrangement manner of ports corresponding to each reference signal resource, or a topology structure of the port group corresponding to each reference signal resource, or a port array corresponding to each reference signal resource.

In Manner 3, each reference signal resource corresponds to one dual-polarized array. Therefore, for a single reference signal resource, quantization feedback may be performed based on an existing codebook. To be specific, the single reference signal resource may be used for separate quantization reporting, so that the reference signal resource can be reused. Therefore, each of the M reference signal resources may be used as a separate measurement resource, and is to be used by a terminal device that does not support channel measurement of more than 32 ports. In actual deployment, measurement capabilities of terminal devices are different, and some terminal devices support only a reference signal resource of no more than 32 ports. Therefore, according to the foregoing manner, the reference signal resource can be reused, and overheads of the reference signal resource can be reduced.

It may be understood that, to implement the functions in the foregoing embodiments, the network device and the terminal include corresponding hardware structures and/or software modules for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 7 and FIG. 8 are diagrams of possible structures of communication apparatuses according to embodiments of this application. These communication apparatuses may be configured to implement functions of the terminal or the network device in the foregoing method embodiments, and therefore can also implement beneficial effects of the foregoing method embodiments. In embodiments of this application, the communication apparatus may be one of terminals 120a to 120j shown in FIG. 1, or may be the base station 110a or 110b shown in FIG. 1, or may be a module (for example, a chip) used in the terminal or the base station.

As shown in FIG. 7, a communication apparatus 700 includes a processing unit 710 and a transceiver unit 720. The communication apparatus 700 is configured to implement the functions of the terminal or the network device in the method embodiment shown in FIG. 4.

When the communication apparatus 700 is configured to implement the functions of the network device in the method embodiment shown in FIG. 4:

a processing unit 710, configured to determine first indication information. The first indication information indicates M reference signal resources, in ports corresponding to the M reference signal resources, a smallest port index is 0+C, and a largest port index is K-1+C, K is a sum of quantities of ports respectively corresponding to the M reference signal resources, M is an integer greater than or equal to 2, C is a constant, and K is an integer greater than 32.

The transceiver unit 720 is configured to: send the first indication information to a terminal device, send a reference signal on the M reference signal resources, and receive CSI from the terminal device. The CSI is determined based on the reference signal.

In a possible design, port indexes of any two of the M reference signal resources are different.

In a possible design, a port index $p_m$ corresponding to a reference signal resource whose sequence number is m is obtained based on an index of a code division multiplexing CDM group of the reference signal resource whose sequence number is m, an index of a sequence in the CDM group of the reference signal resource whose sequence number is m, a size of the CDM group of the reference signal resource whose sequence number is m, and quantities of ports respectively corresponding to reference signal resources whose sequence numbers are less than or equal to m, where $0 \leq m \leq M-1$, and m is an integer.

In a possible design, a correspondence between $p_m$ and all of the index of the CDM group of the reference signal resource whose sequence number is m, the index of the sequence in the CDM group of the reference signal resource whose sequence number is m, the size of the CDM group of the reference signal resource whose sequence number is m, and the quantities of ports respectively corresponding to the reference signal resources whose sequence numbers are less than or equal to m is as follows:

$$p_m = C + s + jL_m + \sum_{k=0}^{m-1} N_k$$

Herein, j represents the index of the CDM group, $0 \leq j \leq \frac{N_m}{L_m} - 1$, s represents the index of the sequence in the CDM group, $0 \leq s \leq L_m$ - $N_m$ represents a quantity of ports of the reference signal resource whose sequence number is m, $L_m$ represents the size of the CDM group, $\sum_{k=0}^{m-1} N_k$ is a sum of quantities of ports respectively corresponding to reference signal resources whose sequence numbers are less than m, $N_k$ is the quantity of ports corresponding to the reference signal resource whose sequence number is k, and j and s are integers.

In a possible design, the quantities of ports respectively corresponding to the M reference signal resources are all N, K=M*N, and N is a positive integer.

In a possible design, a port index $p_m$ corresponding to a reference signal resource whose sequence number is m is obtained based on an index of a CDM group of the reference signal resource whose sequence number is m, an index of a sequence in the CDM group of the reference signal resource whose sequence number is m, a size of the CDM group of the reference signal resource whose sequence number is m, and a value of N, where $0 \leq m \leq M-1$, and m is an integer.

In a possible design, a correspondence between $p_m$ and the index of the CDM group of the reference signal resource whose sequence number is m, the index of the sequence in the CDM group of the reference signal resource whose sequence number is m, the size of the CDM group of the reference signal resource whose sequence number is m, and the value of N is as follows:

$$p_m = C + s + jL_m + m\text{N}$$

Herein, j represents the index of the CDM group, $0 \leq j \leq \frac{\text{N}}{L_m} - 1$, s represents the index of the sequence in the CDM group, $0 \leq s \leq L_m$ - 1, $L_m$ represents the size of the CDM group, and j and s are integers.

In a possible design, a correspondence between $p_m$ and the index of the CDM group of the reference signal resource whose sequence number is m, the index of the sequence in the CDM group of the reference signal resource whose sequence number is m, the size of the CDM group of the reference signal resource whose sequence number is m, and the value of N is as follows:

$$p_m = C + (s + jL_m)M + m$$

Herein, j represents the index of the CDM group, $0 \leq j \leq \frac{\text{N}}{L_m} - 1$, s represents the index of the sequence in the CDM group, $0 \leq s \leq L_m$ - 1, $L_m$ represents the size of the CDM group, and j and s are integers.

In a possible design, the port index $p_m$ corresponding to the reference signal resource whose sequence number is m is obtained based on an index of a CDM group of the reference signal resource whose sequence number is m, an index of a sequence in the CDM group of the reference signal resource whose sequence number is m, a size of the CDM group of the reference signal resource whose sequence number is m, a value of N, a quantity $n_1$ of ports in a first dimension in the port group corresponding to each reference signal resource, a quantity $n_2$ of ports in a second dimension in the port group corresponding to each reference signal resource, a sequence number in the first dimension in the port group corresponding to the reference signal resource whose sequence number is m, and a sequence number in the second dimension in the port group corresponding to the reference signal resource whose sequence number is m, $0 \leq m \leq M-1$, m is an integer, $K=2M*n_1*n_2$, quantities of ports in the first dimension in the port groups respectively corresponding to the M reference signal resources are the same, and quantities of ports in the second dimension in the port groups respectively corresponding to the M reference signal resources are the same.

In a possible design, the transceiver unit 720 is configured to send second indication information to the terminal device. The second indication information indicates the quantity $n_1$ of ports in the first dimension in the port group corresponding to each reference signal resource and/or the quantity $n_2$ of ports in the second dimension in the port group corresponding to each reference signal resource.

In a possible design, sequence numbers respectively corresponding to the M reference signal resources are determined based on identifiers respectively corresponding to the M reference signal resources, or are determined based on a configuration sequence of the M reference signal resources.

In a possible design, the transceiver unit 720 is configured to send third indication information is sent to the terminal device. The third indication information indicates a quantity $N_1$ of ports in the first dimension and/or a quantity $N_2$ of ports in the second dimension, $N_1$ and $N_2$ are positive integers, and $K=2N_1*N_2$. The processing unit 710 is configured to determine the ports corresponding to the M reference signal resources and corresponding port indexes based on the quantity $N_1$ of ports in the first dimension, the quantity $N_2$ of ports in the second dimension, and the polarization direction.

When the communication apparatus 700 is configured to implement the functions of the terminal device in the method embodiment shown in FIG. 4:

The transceiver unit is configured to: receive first indication information from a network device, and receive a reference signal on M reference signal resources. The first indication information indicates the M reference signal resources, in ports corresponding to the M reference signal resources, a smallest port index is 0+C, and a largest port index is K-1+C, K is a sum of quantities of ports respectively corresponding to the M reference signal resources, M is an integer greater than or equal to 2, C is a constant, and K is an integer greater than 32.

The processing unit is configured to determine CSI. The CSI is determined based on the reference signal.

The transceiver unit is configured to send the CSI to the network device.

In a possible design, port indexes of any two of the M reference signal resources are different.

In a possible design, a port index $p_m$ corresponding to a reference signal resource whose sequence number is m is obtained based on an index of a code division multiplexing CDM group of the reference signal resource whose sequence number is m, an index of a sequence in the CDM group of the reference signal resource whose sequence number is m, a size of the CDM group of the reference signal resource whose sequence number is m, and quantities of ports respectively corresponding to reference signal resources whose sequence numbers are less than or equal to m, where $0 \leq m \leq M-1$, and m is an integer.

In a possible design, a correspondence between $p_m$ and all of the index of the CDM group of the reference signal resource whose sequence number is m, the index of the sequence in the CDM group of the reference signal resource whose sequence number is m, the size of the CDM group of the reference signal resource whose sequence number is m, and the quantities of ports respectively corresponding to the reference signal resources whose sequence numbers are less than or equal to m is as follows:

$$p_m = C + s + jL_m + \sum_{k=0}^{m-1} N_k$$

Herein, j represents the index of the CDM group, $0 \leq j \leq \frac{N_m}{L_m} - 1$, s represents the index of the sequence in the CDM group, $0 \leq s \leq L_m$ - $N_m$ represents a quantity of ports of the reference signal resource whose sequence number is m, $L_m$ represents the size of the CDM group, $\sum_{k=0}^{m-1} N_k$ is a sum of quantities of ports respectively corresponding to reference signal resources whose sequence numbers are less than m, $N_k$ is the quantity of ports corresponding to the reference signal resource whose sequence number is k, and j and s are integers.

In a possible design, the quantities of ports respectively corresponding to the M reference signal resources are all N, K=M*N, and N is a positive integer.

In a possible design, a port index $p_m$ corresponding to a reference signal resource whose sequence number is m is obtained based on an index of a CDM group of the reference signal resource whose sequence number is m, an index of a sequence in the CDM group of the reference signal resource whose sequence number is m, a size of the CDM group of the reference signal resource whose sequence number is m, and a value of N, where 0≤m≤M-1, and m is an integer.

In a possible design, a correspondence between $p_m$ and the index of the CDM group of the reference signal resource whose sequence number is m, the index of the sequence in the CDM group of the reference signal resource whose sequence number is m, the size of the CDM group of the reference signal resource whose sequence number is m, and the value of N is as follows:

$$p_m = C + s + jL_m + m\text{N}$$

Herein, j represents the index of the CDM group, $0 \leq j \leq \frac{\text{N}}{L_m} - 1$, s represents the index of the sequence in the CDM group, $0 \leq s \leq L_m$ - 1, $L_m$ represents the size of the CDM group, and j and s are integers.

In a possible design, a correspondence between $p_m$ and the index of the CDM group of the reference signal resource whose sequence number is m, the index of the sequence in the CDM group of the reference signal resource whose sequence number is m, the size of the CDM group of the reference signal resource whose sequence number is m, and the value of N is as follows:

$$p_m = C + (s + jL_m)M + m$$

Herein, j represents the index of the CDM group, $0 \leq j \leq \frac{\text{N}}{L_m} - 1$, s represents the index of the sequence in the CDM group, $0 \leq s \leq L_m$ - 1, $L_m$ represents the size of the CDM group, and j and s are integers.

In a possible design, the port index $p_m$ corresponding to the reference signal resource whose sequence number is m is obtained based on an index of a CDM group of the reference signal resource whose sequence number is m, an index of a sequence in the CDM group of the reference signal resource whose sequence number is m, a size of the CDM group of the reference signal resource whose sequence number is m, a value of N, a quantity $n_1$ of ports in a first dimension in the port group corresponding to each reference signal resource, a quantity $n_2$ of ports in a second dimension in the port group corresponding to each reference signal resource, a sequence number in the first dimension in the port group corresponding to the reference signal resource whose sequence number is m, and a sequence number in the second dimension in the port group corresponding to the reference signal resource whose sequence number is m, 0≤m≤M-1, m is an integer, K=2M*$n_1$*$n_2$, quantities of ports in the first dimension in the port groups respectively corresponding to the M reference signal resources are the same, and quantities of ports in the second dimension in the port groups respectively corresponding to the M reference signal resources are the same.

In a possible design, the transceiver unit 720 is configured to receive second indication information from the network device. The second indication information indicates the quantity $n_1$ of ports in the first dimension in the port group corresponding to each reference signal resource and/or the quantity $n_2$ of ports in the second dimension in the port group corresponding to each reference signal resource.

In a possible design, sequence numbers respectively corresponding to the M reference signal resources are determined based on identifiers respectively corresponding to the M reference signal resources, or are determined based on a configuration sequence of the M reference signal resources.

In a possible design, the transceiver unit 720 is configured to receive third indication information from the network device. The third indication information indicates a quantity $N_1$ of ports in the first dimension and/or a quantity $N_2$ of ports in the second dimension, $N_1$ and $N_2$ are positive integers, and K=2$N_1$*$N_2$. The processing unit 710 is configured to determine the ports corresponding to the M reference signal resources and corresponding port indexes based on the quantity $N_1$ of ports in the first dimension, the quantity $N_2$ of ports in the second dimension, and the polarization direction.

More detailed descriptions of the processing unit 710 and the transceiver unit 720 may be directly obtained by referring to the related descriptions in the method embodiment shown in FIG. 4. Details are not described herein again.

As shown in FIG. 8, the communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to: store instructions executed by the processor 810, or store input data required by the processor 810 to run the instructions, or store data generated after the processor 810 runs the instructions.

When the communication apparatus 800 is configured to implement the method shown in FIG. 4, the processor 810 is configured to implement the function of the processing unit 710, and the interface circuit 820 is configured to implement the function of the transceiver unit 720.

When the communication apparatus is a chip used in a terminal, the chip in the terminal implements functions of the terminal in the method embodiments. The chip in the terminal receives information from another module (for example, a radio frequency module or an antenna) in the terminal, where the information is sent by a network device to the terminal. Alternatively, the chip in the terminal sends information to another module (for example, a radio frequency module or an antenna) in the terminal, where the information is sent by the terminal to the network device.

When the communication apparatus is a module used in a network device, the module in the network device implements a function of the network device in the foregoing method embodiments. The module in the network device receives information from another module (for example, a radio frequency module or an antenna) in the network device, where the information is sent by a terminal to the network device; or the module in the network device sends information to another module (for example, a radio frequency module or an antenna) in the network device, where the information is sent by the network device to a terminal. The module in the network device herein may be a baseband chip of the network device, or may be a DU or another module. The DU herein may be a DU in an open radio access network (open radio access network, O-RAN) architecture.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any conventional processor.

This application provides another example of an apparatus. The notification apparatus includes at least one processor and at least one memory. The at least one processor is coupled to the at least one memory. The at least one memory is configured to store instructions. When the instructions are executed by the at least one processor, the communication apparatus is enabled to perform the method in the foregoing embodiments. An example in which the communication apparatus includes a processor and a memory is used. As shown in FIG. 8, the communication apparatus 800 includes a processor 810 and a memory 830. The processor 810 is coupled to the memory 830. The memory 830 stores instructions. When the instructions stored in the memory 830 are executed by the processor 810, the communication apparatus 800 performs the method performed by the network device or the terminal in the foregoing embodiments.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in the network device or the terminal. Alternatively, the processor and the storage medium may exist in a network device or a terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise specified or there is a logic conflict, terms and/or descriptions in different embodiments are consistent and may be mutually referenced, and technical features in different embodiments may be combined based on an internal logical relationship thereof to form a new embodiment.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A resource configuration method, wherein the method comprises:

   sending first indication information to a terminal device, wherein the first indication information indicates M reference signal resources, in ports corresponding to the M reference signal resources, a smallest port index is 0+C, and a largest port index is K-1+C, K is a sum of quantities of ports respectively corresponding to the M reference signal resources, M is an integer greater than or equal to 2, C is a constant, and K is an integer greater than 32;
   sending a reference signal on the M reference signal resources; and
   receiving channel state information CSI from the terminal device, wherein the CSI is determined based on the reference signal.

2. The method according to claim 1, wherein port indexes of any two of the M reference signal resources are different.

3. The method according to claim 1 or 2, wherein a port index $p_m$ corresponding to a reference signal resource whose sequence number is m is obtained based on an index of a code division multiplexing CDM group of the reference signal resource whose sequence number is m, an index of a sequence in the CDM group of the reference signal resource whose sequence number is m, a size of the CDM group of the reference signal resource whose sequence number is m, and quantities of ports respectively corresponding to reference signal resources whose sequence numbers are less than or equal to m, wherein $0 \leq m \leq M-1$, and m is an integer.

4. The method according to claim 3, wherein a correspondence between $p_m$ and all of the index of the CDM group of the reference signal resource whose sequence number is m, the index of the sequence in the CDM group of the reference signal resource whose sequence number is m, the size of the CDM group of the reference signal resource whose sequence number is m, and the quantities of ports respectively corresponding to the reference signal resources whose sequence numbers are less than or equal to m is as follows:

$$p_m = C + s + jL_m + \sum_{k=0}^{m-1} N_k,$$

   wherein

   j represents the index of the CDM group, $0 \leq j \leq \frac{N_m}{L_m} - 1$, s represents the index of the sequence in the CDM group, $0 \leq s \leq L_m - 1$, $N_m$ represents a quantity of ports of the reference signal resource whose sequence number is m, $L_m$ represents the size of the CDM group, $\sum_{k=0}^{m-1} N_k$ is a sum of quantities of ports respectively corresponding to reference signal resources whose sequence numbers are less than m, $N_m$ is the quantity of ports corresponding to the reference signal resource whose sequence number is m, and j and s are integers.

5. The method according to claim 1 or 2, wherein the quantities of ports respectively corresponding to the M reference signal resources are all N, K=M*N, and N is a positive integer.

6. The method according to claim 5, wherein a port index $p_m$ corresponding to a reference signal resource whose sequence number is m is obtained based on an index of a CDM group of the reference signal resource whose sequence number is m, an index of a sequence in the CDM group of the reference signal resource whose sequence number is m, a size of the CDM group of the reference signal resource whose sequence number is m, and a value of N, wherein $0 \leq m \leq M-1$, and m is an integer.

7. The method according to claim 6, wherein a correspondence between $p_m$ and the index of the CDM group of the reference signal resource whose sequence number is m, the index of the sequence in the CDM group of the reference signal resource whose sequence number is m, the size of the CDM group of the reference signal resource whose sequence number is m, and the value of N is as follows:

$$p_m = C + s + jL_m + mN,$$

wherein

j represents the index of the CDM group, $0 \leq j \leq \dfrac{N}{L_m} - 1$ , s represents the index of the sequence in the CDM group, $0 \leq s \leq L_m - 1$, $L_m$ represents the size of the CDM group, and j and s are integers.

8. The method according to claim 6, wherein a correspondence between $p_m$ and the index of the CDM group of the reference signal resource whose sequence number is m, the index of the sequence in the CDM group of the reference signal resource whose sequence number is m, the size of the CDM group of the reference signal resource whose sequence number is m, and the value of N is as follows:

$$p_m = C + (s + jL_m)M + m,$$

wherein

j represents the index of the CDM group, $0 \leq j \leq \dfrac{N}{L_m} - 1$ , s represents the index of the sequence in the CDM group, $0 \leq s \leq L_m - 1$, $L_m$ represents the size of the CDM group, and j and s are integers.

9. The method according to claim 5, wherein a port index $p_m$ corresponding to a reference signal resource whose sequence number is m is obtained based on a quantity $n_1$ of ports in a first dimension in a polarization direction in a port group corresponding to each reference signal resource, a quantity $n_2$ of ports in a second dimension in the polarization direction in the port group corresponding to each reference signal resource, and a location of a port group corresponding to the reference signal resource whose sequence number is m in port groups respectively corresponding to the M reference signal resources.

10. The method according to claim 5 or 9, wherein the port index $p_m$ corresponding to the reference signal resource whose sequence number is m is obtained based on an index of a CDM group of the reference signal resource whose sequence number is m, an index of a sequence in the CDM group of the reference signal resource whose sequence number is m, a size of the CDM group of the reference signal resource whose sequence number is m, a value of N, a quantity $n_1$ of ports in a first dimension in the polarization direction in the port group corresponding to each reference signal resource, a quantity $n_2$ of ports in a second dimension in the polarization direction in the port group corresponding to each reference signal resource, a sequence number in the first dimension in the port group corresponding to the reference signal resource whose sequence number is m, and a sequence number in the second dimension in the port group corresponding to the reference signal resource whose sequence number is m, $0 \leq m \leq M-1$, m is an integer, $K=2M*n_1*n_2$, quantities of ports in the first dimension in the port groups respectively corresponding to the M reference signal resources are the same, and quantities of ports in the second dimension in the port groups respectively corresponding to the M reference signal resources are the same.

11. The method according to claim 10, wherein the port index $p_m$ corresponding to the reference signal resource whose sequence number is m is determined based on Formula A or Formula B:

Formula A:

$$p_m = \begin{cases} 3000 + \frac{N_m}{2}\frac{N_2}{n_2}\,h_m + n_2 v_m + \left\lfloor \frac{s+jL_m}{n_2} \right\rfloor N_2 + \left((s+jL_m)\%n_2\right), s+jL_m < \frac{N_m}{2} \\ 3000 + \frac{N_m}{2}\frac{N_2}{n_2}\,h_m + n_2 v_m + \left\lfloor \frac{s+jL_m-\frac{N_m}{2}}{n_2} \right\rfloor N_2 + \left(\left(s+jL_m - \frac{N_m}{2}\right)\%n_2\right) + \frac{K}{2}, s+jL_m \geq \frac{N_m}{2} \end{cases};$$

and

Formula B:

$$p_m = 3000 + \frac{N_m}{2}\frac{N_2}{n_2}h_m + n_2 v_m + \left\lfloor \left(s+jL_m - \frac{N_m}{2}\left\lfloor(s+jL_m)/\frac{N_m}{2}\right\rfloor\right)/n_2 \right\rfloor N_2 + \left(\left(s+jL_m - \right.\right.$$

$$\left.\left.\frac{N_m}{2}\left\lfloor(s+jL_m)/\frac{N_m}{2}\right\rfloor\right)\%n_2\right) + \frac{K}{2}\left\lfloor(s+jL_m)/\frac{N_m}{2}\right\rfloor,$$

wherein

j represents the index of the CDM group, $0 \leq j \leq \frac{N_m}{L_m} - 1$, s represents the index of the sequence in the CDM group, $0 \leq s \leq L_m$ - 1, $L_m$ represents the size of the CDM group of the reference signal resource whose sequence number is m, $N_m$ represents a quantity of ports of the reference signal resource whose sequence number is m, $N_1$ and $N_2$ are respectively a quantity of ports in the first dimension in the polarization direction and a quantity of ports in the second dimension in the polarization direction, $h_m$ represents the sequence number in the first dimension in the port group corresponding to the reference signal resource whose sequence number is m, $0 \leq h_m \leq \frac{N_1}{n_1} - 1$, $v_m$ represents the sequence number in the second dimension in the port group corresponding to the reference signal resource whose sequence number is m, $0 \leq v_m \leq \frac{N_2}{n_2} - 1$, $n_1$ represents the quantity of ports in the first dimension in the polarization direction in the port group corresponding to each reference signal resource, $n_2$ represents the quantity of ports in the second dimension in the polarization direction in the port group corresponding to each reference signal resource, j, s, $L_m$, $h_m$, $v_m$, $n_1$, and $n_2$ are integers, $\lfloor \cdot \rfloor$ represents rounding down, and % represents a modulo operation.

12. The method according to claim 11, wherein $N_1 = n_1$ or $N_2 = n_2$.

13. The method according to any one of claims 9 to 12, wherein when $N_1 = n_1$ and/or $N_2 = n_2$, K, $N_1$, $N_2$, $n_1$, and $n_2$ meet one or more of the following correspondences:

when K=48, $N_1$=8, $N_2$=3, $n_1$=4, and $n_2$=3; or
when K=48, $N_1$=8, $N_2$=3, $n_1$=8, and $n_2$=1; or
when K=48, $N_1$=6, $N_2$=4, $n_1$=6, and $n_2$=2; or
when K=64, $N_1$=16, $N_2$=2, $n_1$=8, and $n_2$=2; or
when K=64, $N_1$=16, $N_2$=2, $n_1$=16, and $n_2$=1; or
when K=64, $N_1$=8, $N_2$=4, $n_1$=4, and $n_2$=4; or
when K=64, $N_1$=8, $N_2$=4, $n_1$=8, and $n_2$=2; or
when K=128, $N_1$=16, $N_2$=4, $n_1$=4, and $n_2$=4; or
when K=128, $N_1$=16, $N_2$=4, $n_1$=16, and $n_2$=1; or
when K=128, $N_1$=8, $N_2$=8, $n_1$=8, and $n_2$=2.

14. The method according to any one of claims 5 to 13, wherein the quantities of ports respectively corresponding to the M reference signal resources are all N, and $N_m$=N; and/or
sizes of CDM groups respectively corresponding to the M reference signal resources are all L, and $L_m$=L.

15. The method according to any one of claims 5 to 14, wherein the M reference signal resources correspond to a total of K ports, and ports comprised in the port group corresponding to each reference signal resource are in one-to-one correspondence with a part of the K ports.

**16.** The method according to any one of claims 9 to 15, further comprising:
sending second indication information to the terminal device, wherein the second indication information indicates the quantity $n_1$ of ports in the first dimension in the polarization direction in the port group corresponding to each reference signal resource and/or the quantity $n_2$ of ports in the second dimension in the polarization direction in the port group corresponding to each reference signal resource.

**17.** The method according to any one of claims 1 to 16, wherein sequence numbers respectively corresponding to the M reference signal resources are determined based on identifiers respectively corresponding to the M reference signal resources, or are determined based on a configuration sequence of the M reference signal resources.

**18.** The method according to any one of claims 1 to 17, further comprising:

sending third indication information to the terminal device, wherein the third indication information indicates a quantity $N_1$ of ports in the first dimension in the polarization direction and/or a quantity $N_2$ of ports in the second dimension in the polarization direction, $N_1$ and $N_2$ are positive integers, and $K=2N_1*N_2$, wherein
the method further comprises:
determining the ports corresponding to the M reference signal resources and corresponding port indexes based on the quantity $N_1$ of ports in the first dimension in the polarization direction, the quantity $N_2$ of ports in the second dimension in the polarization direction, and the polarization direction.

**19.** A resource configuration method, wherein the method comprises:

receiving first indication information from a network device, wherein the first indication information indicates M reference signal resources, in ports corresponding to the M reference signal resources, a smallest port index is 0+C, and a largest port index is K-1+C, K is a sum of quantities of ports respectively corresponding to the M reference signal resources, M is an integer greater than or equal to 2, C is a constant, and K is an integer greater than 32;
receiving a reference signal on the M reference signal resources; and
sending CSI to the network device, wherein the CSI is determined based on the reference signal.

**20.** The method according to claim 19, wherein port indexes of any two of the M reference signal resources are different.

**21.** The method according to claim 19 or 20, wherein a port index $p_m$ corresponding to a reference signal resource whose sequence number is m is obtained based on an index of a code division multiplexing CDM group of the reference signal resource whose sequence number is m, an index of a sequence in the CDM group of the reference signal resource whose sequence number is m, a size of the CDM group of the reference signal resource whose sequence number is m, and quantities of ports respectively corresponding to reference signal resources whose sequence numbers are less than or equal to m, wherein $0 \leq m \leq M-1$, and m is an integer.

**22.** The method according to claim 21, wherein a correspondence between $p_m$ and all of the index of the CDM group of the reference signal resource whose sequence number is m, the index of the sequence in the CDM group of the reference signal resource whose sequence number is m, the size of the CDM group of the reference signal resource whose sequence number is m, and the quantities of ports respectively corresponding to the reference signal resources whose sequence numbers are less than or equal to m is as follows:

$$p_m = C + s + jL_m + \sum_{k=0}^{m-1} N_k \,,$$

wherein

j represents the index of the CDM group, $0 \leq j \leq \frac{N_m}{L_m} - 1$, s represents the index of the sequence in the CDM group, $0 \leq s \leq L_m - 1$, $N_m$ represents a quantity of ports of the reference signal resource whose sequence number is m, $L_m$ represents the size of the CDM group, $\sum_{k=0}^{m-1} N_k$ is a sum of quantities of ports respectively corresponding to reference signal resources whose sequence numbers are less than m, $N_m$ is the quantity of ports corresponding to the reference signal resource whose sequence number is m, and j and s are integers.

23. The method according to claim 19 or 20, wherein the quantities of ports respectively corresponding to the M reference signal resources are all N, K=M*N, and N is a positive integer.

24. The method according to claim 23, wherein a port index $p_m$ corresponding to a reference signal resource whose sequence number is m is obtained based on an index of a CDM group of the reference signal resource whose sequence number is m, an index of a sequence in the CDM group of the reference signal resource whose sequence number is m, a size of the CDM group of the reference signal resource whose sequence number is m, and a value of N, wherein $0 \leq m \leq M-1$, and m is an integer.

25. The method according to claim 24, wherein a correspondence between $p_m$ and the index of the CDM group of the reference signal resource whose sequence number is m, the index of the sequence in the CDM group of the reference signal resource whose sequence number is m, the size of the CDM group of the reference signal resource whose sequence number is m, and the value of N is as follows:

$$p_m = C + s + jL_m + mN,$$

wherein

j represents the index of the CDM group, $0 \leq j \leq \frac{N}{L_m} - 1$, s represents the index of the sequence in the CDM group, $0 \leq s \leq L_m - 1$, $L_m$ represents the size of the CDM group, and j and s are integers.

26. The method according to claim 24, wherein a correspondence between $p_m$ and the index of the CDM group of the reference signal resource whose sequence number is m, the index of the sequence in the CDM group of the reference signal resource whose sequence number is m, the size of the CDM group of the reference signal resource whose sequence number is m, and the value of N is as follows:

$$p_m = C + (s + jL_m)M + m,$$

wherein

j represents the index of the CDM group, $0 \leq j \leq \frac{N}{L_m} - 1$, s represents the index of the sequence in the CDM group, $0 \leq s \leq L_m - 1$, $L_m$ represents the size of the CDM group, and j and s are integers.

27. The method according to claim 21, wherein a port index $p_m$ corresponding to a reference signal resource whose sequence number is m is obtained based on a quantity $n_1$ of ports in a first dimension in a polarization direction in a port group corresponding to each reference signal resource, a quantity $n_2$ of ports in a second dimension in the polarization direction in the port group corresponding to each reference signal resource, and a location of a port group corresponding to the reference signal resource whose sequence number is m in port groups respectively corresponding to the M reference signal resources.

28. The method according to claim 21 or 27, wherein the port index $p_m$ corresponding to the reference signal resource whose sequence number is m is obtained based on an index of a CDM group of the reference signal resource whose sequence number is m, an index of a sequence in the CDM group of the reference signal resource whose sequence number is m, a size of the CDM group of the reference signal resource whose sequence number is m, a value of N, a quantity $n_1$ of ports in a first dimension in the polarization direction in the port group corresponding to each reference signal resource, a quantity $n_2$ of ports in a second dimension in the polarization direction in the port group corresponding to each reference signal resource, a sequence number in the first dimension in the port group corresponding to the reference signal resource whose sequence number is m, and a sequence number in the second dimension in the port group corresponding to the reference signal resource whose sequence number is m, $0 \leq m \leq M-1$, m is an integer, $K=2M*n_1*n_2$, quantities of ports in the first dimension in the port groups respectively corresponding to the M reference signal resources are the same, and quantities of ports in the second dimension in the port groups respectively corresponding to the M reference signal resources are the same.

29. The method according to claim 28, wherein the port index $p_m$ corresponding to the reference signal resource whose sequence number is m is determined based on Formula A or Formula B:

Formula A:

$$p_m = \begin{cases} 3000 + \frac{N_m}{2}\frac{N_2}{n_2}\, h_m + n_2 v_m + \left\lfloor \frac{s+jL_m}{n_2} \right\rfloor N_2 + \left((s+jL_m)\%n_2\right), s+jL_m < \frac{N_m}{2} \\ 3000 + \frac{N_m}{2}\frac{N_2}{n_2}\, h_m + n_2 v_m + \left\lfloor \frac{s+jL_m-\frac{N_m}{2}}{n_2} \right\rfloor N_2 + \left(\left(s+jL_m-\frac{N_m}{2}\right)\%n_2\right) + \frac{K}{2}, s+jL_m \geq \frac{N_m}{2} \end{cases};$$

and

Formula B:

$$p_m = 3000 + \frac{N_m}{2}\frac{N_2}{n_2}h_m + n_2 v_m + \left\lfloor \left(s+jL_m - \frac{N_m}{2}\left\lfloor (s+jL_m)/\frac{N_m}{2} \right\rfloor\right)/n_2 \right\rfloor N_2 + \left(\left(s+jL_m - \right.\right.$$

$$\left.\left.\frac{N_m}{2}\left\lfloor (s+jL_m)/\frac{N_m}{2} \right\rfloor\right)\%n_2\right) + \frac{K}{2}\left\lfloor (s+jL_m)/\frac{N_m}{2} \right\rfloor,$$

wherein

j represents the index of the CDM group, $0 \leq j \leq \frac{N_m}{L_m} - 1$, s represents the index of the sequence in the CDM group, $0 \leq s \leq L_m - 1$, $L_m$ represents the size of the CDM group of the reference signal resource whose sequence number is m, $N_m$ represents a quantity of ports of the reference signal resource whose sequence number is m, $N_1$ and $N_2$ are respectively a quantity of ports in the first dimension in the polarization direction and a quantity of ports in the second dimension in the polarization direction, $h_m$ represents the sequence number in the first dimension in the port group corresponding to the reference signal resource whose sequence number is m, $0 \leq h_m \leq \frac{N_1}{n_1} - 1$, $v_m$ represents the sequence number in the second dimension in the port group corresponding to the reference signal resource whose sequence number is m, $0 \leq v_m \leq \frac{N_2}{n_2} - 1$, $n_1$ represents the quantity of ports in the first dimension in the polarization direction in the port group corresponding to each reference signal resource, $n_2$ represents the quantity of ports in the second dimension in the polarization direction in the port group corresponding to each reference signal resource, j, s, $L_m$, $h_m$, $v_m$, $n_1$, and $n_2$ are integers, $\lfloor \cdot \rfloor$ represents rounding down, and % represents a modulo operation.

**30.** The method according to claim 29, wherein $N_1=n_1$ or $N_2=n_2$.

**31.** The method according to any one of claims 28 to 30, wherein when $N_1=n_1$ and/or $N_2=n_2$, K, $N_1$, $N_2$, $n_1$, and $n_2$ meet one or more of the following correspondences:

when K=48, $N_1$=8, $N_2$=3, $n_1$=4, and $n_2$=3; or
when K=48, $N_1$=8, $N_2$=3, $n_1$=8, and $n_2$=1; or
when K=48, $N_1$=6, $N_2$=4, $n_1$=6, and $n_2$=2; or
when K=64, $N_1$=16, $N_2$=2, $n_1$=8, and $n_2$=2; or
when K=64, $N_1$=16, $N_2$=2, $n_1$=16, and $n_2$=1; or
when K=64, $N_1$=8, $N_2$=4, $n_1$=4, and $n_2$=4; or
when K=64, $N_1$=8, $N_2$=4, $n_1$=8, and $n_2$=2; or
when K=128, $N_1$=16, $N_2$=4, $n_1$=4, and $n_2$=4; or
when K=128, $N_1$=16, $N_2$=4, $n_1$=16, and $n_2$=1; or
when K=128, $N_1$=8, $N_2$=8, $n_1$=8, and $n_2$=2.

**32.** The method according to any one of claims 23 to 31, wherein the quantities of ports respectively corresponding to the M reference signal resources are all N, and $N_m$=N; and/or
sizes of CDM groups respectively corresponding to the M reference signal resources are all L, and $L_m$=L.

**33.** The method according to any one of claims 23 to 32, wherein the M reference signal resources correspond to a total of K ports, and ports comprised in the port group corresponding to each reference signal resource are in one-to-one correspondence with a part of the K ports.

34. The method according to any one of claims 23 to 33, further comprising:
receiving second indication information from the network device, wherein the second indication information indicates the quantity $n_1$ of ports in the first dimension in the polarization direction in the port group corresponding to each reference signal resource and/or the quantity $n_2$ of ports in the second dimension in the polarization direction in the port group corresponding to each reference signal resource.

35. The method according to any one of claims 19 to 34, wherein sequence numbers respectively corresponding to the M reference signal resources are determined based on identifiers respectively corresponding to the M reference signal resources, or are determined based on a configuration sequence of the M reference signal resources.

36. The method according to any one of claims 19 to 35, further comprising:

receiving third indication information from the network device, wherein the third indication information indicates a quantity $N_1$ of ports in the first dimension in the polarization direction and/or a quantity $N_2$ of ports in the second dimension in the polarization direction, $N_1$ and $N_2$ are positive integers, and $K=2N_1*N_2$, wherein
the method further comprises:
determining the ports corresponding to the M reference signal resources and corresponding port indexes based on the quantity $N_1$ of ports in the first dimension in the polarization direction, the quantity $N_2$ of ports in the second dimension in the polarization direction, and the polarization direction.

37. A communication apparatus, comprising units or modules configured to perform the method according to any one of claims 1 to 18, or comprising units or modules configured to perform the method according to any one of claims 19 to 36.

38. A communication apparatus, comprising one or more processors and an interface circuit, wherein the interface circuit is configured to provide an input and/or an output of a program or instructions for at least one processor, and when the program or the instructions are executed by the one or more processors, the apparatus is enabled to perform the method according to any one of claims 1 to 18, or perform the method according to any one of claims 19 to 36.

39. The communication apparatus according to claim 38, wherein the communication apparatus further comprises one or more memories, and the one or more memories are configured to store the program or instructions.

40. A readable storage medium, wherein the readable storage medium comprises a program, and when the program runs on an apparatus, the apparatus is enabled to perform the method according to any one of claims 1 to 18, or perform the method according to any one of claims 19 to 36.

41. A computer program product, wherein the computer program product comprises a computer program or instructions, and when the computer program or the instructions are executed by a communication apparatus, the method according to any one of claims 1 to 18 is implemented, or the method according to any one of claims 19 to 36 is implemented.

FIG. 1

FIG. 2A

Code
domain

Frequency
domain

Time-frequency
domain CDM

Time domain

FIG. 2B

Code domain

Frequency domain

Time domain

Time-frequency domain CDM

FIG. 2C

FIG. 3

```
┌─────────────────────┐                          ┌─────────────────────┐
│   Network device    │                          │   Terminal device   │
└─────────────────────┘                          └─────────────────────┘
```

Step 400: First indication information, where the first
indication information indicates M reference signal
resources, in ports corresponding to the M reference
signal resources, a smallest port index is 0+C, and a
largest port index is K–1+C, K is a sum of quantities
of ports respectively corresponding to the M reference
signal resources, and M is an integer greater than or
equal to 2

Step 410: Send a reference signal on
the M reference signal resources

Step 420: CSI

## FIG. 4

Ports corresponding to a CSI-RS
resource whose sequence number is 0

Ports corresponding to a CSI-RS
resource whose sequence number is 1

Ports corresponding to a CSI-RS
resource whose sequence number is 2

Ports corresponding to a CSI-RS
resource whose sequence number is 3

Ports corresponding to a CSI-RS
resource whose sequence number is 0

Ports corresponding to a CSI-RS
resource whose sequence number is 1

Ports corresponding to a CSI-RS
resource whose sequence number is 2

Ports corresponding to a CSI-RS
resource whose sequence number is 3

## FIG. 5

CSI-RS resource whose sequence
number is 0: (0, 0)

CSI-RS resource whose sequence
number is 2: (1, 0)

CSI-RS resource whose sequence
number is 1: (0, 1)

CSI-RS resource whose sequence
number is 3: (1, 1)

FIG. 6

Communication apparatus 700

Processing unit 710

Transceiver unit 720

FIG. 7

Communication apparatus 800

Processor 810

Interface circuit
820

Memory 830

FIG. 8

1<sup>st</sup> reference signal resource    2<sup>nd</sup> reference signal resource    3<sup>rd</sup> reference signal resource    4<sup>th</sup> reference signal resource

FIG. 9

EP 4 780 111 A1

FIG. 10

## INTERNATIONAL SEARCH REPORT

| International application No. |
| --- |
| **PCT/CN2024/117731** |

| A. | CLASSIFICATION OF SUBJECT MATTER |
| --- | --- |
| | H04W72/231(2023.01)i |

According to International Patent Classification (IPC) or to both national classification and IPC

| B. | FIELDS SEARCHED |
| --- | --- |

Minimum documentation searched (classification system followed by classification symbols)

    IPC:H04L,H04W

Documentation searched other than minimum documentation to the extent that such documents are included in the fields searched

Electronic data base consulted during the international search (name of data base and, where practicable, search terms used)

    CNTXT, ENTXT, ENTXTC, 3GPP: 参考信号, 端口, 号, 索引, 信道状态, 资源, CSI, index, "32", "64", CDM, 组, 极化, group, resource, port, RS, resource, polar

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2022183378 A1 (GUANGDONG OPPO MOBILE COMMUNICATIONS CO., LTD.) 09 September 2022 (2022-09-09)<br>description, pages 3-18 | 1-2, 5, 14-15, 17, 19-20, 23, 32-33, 35, 37-41 |
| A | WO 2017166256 A1 (HUAWEI TECHNOLOGIES CO., LTD.) 05 October 2017 (2017-10-05)<br>entire document | 1-41 |
| A | CN 107567695 A (SAMSUNG ELECTRONICS CO., LTD.) 09 January 2018 (2018-01-09)<br>entire document | 1-41 |
| A | CN 115696307 A (HUAWEI TECHNOLOGIES CO., LTD.) 03 February 2023 (2023-02-03)<br>entire document | 1-41 |
| A | WO 2022094972 A1 (QUALCOMM INC.) 12 May 2022 (2022-05-12)<br>entire document | 1-41 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **05 December 2024** | **11 December 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/117731**

| Patent document cited in search report | | | Publication date (day/month/year) | Patent family member(s) | | | Publication date (day/month/year) |
|---|---|---|---|---|---|---|---|
| WO | 2022183378 | A1 | 09 September 2022 | CN | 116868515 | A | 10 October 2023 |
| | | | | WO | 2022183563 | A1 | 09 September 2022 |
| WO | 2017166256 | A1 | 05 October 2017 | CN | 108781097 | A | 09 November 2018 |
| | | | | EP | 3429088 | A1 | 16 January 2019 |
| | | | | US | 2019036664 | A1 | 31 January 2019 |
| | | | | JP | 2019514265 | W | 30 May 2019 |
| CN | 107567695 | A | 09 January 2018 | KR | 20220072877 | A | 02 June 2022 |
| | | | | EP | 4161168 | A1 | 05 April 2023 |
| | | | | AU | 2016241468 | A1 | 09 November 2017 |
| | | | | US | 2018091273 | A1 | 29 March 2018 |
| | | | | JP | 2022058721 | A | 12 April 2022 |
| | | | | WO | 2016159621 | A1 | 06 October 2016 |
| | | | | EP | 3276849 | A1 | 31 January 2018 |
| | | | | KR | 20170134526 | A | 06 December 2017 |
| | | | | JP | 2018512027 | A | 26 April 2018 |
| | | | | CA | 2981136 | A1 | 06 October 2016 |
| | | | | US | 2020228281 | A1 | 16 July 2020 |
| | | | | CN | 112910618 | A | 04 June 2021 |
| CN | 115696307 | A | 03 February 2023 | WO | 2023005904 | A1 | 02 February 2023 |
| | | | | EP | 4369774 | A1 | 15 May 2024 |
| | | | | US | 2024163855 | A1 | 16 May 2024 |
| WO | 2022094972 | A1 | 12 May 2022 | US | 2024048325 | A1 | 08 February 2024 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311273544

- CN 202410417567